(19) **Europäisches Patentamt / European Patent Office / Office européen des brevets**

(11) **EP 3 559 631 B1**

(12) **FASCICULE DE BREVET EUROPEEN**

(45) Date de publication et mention
de la délivrance du brevet:
**06.01.2021 Bulletin 2021/01**

(21) Numéro de dépôt: **17829258.7**

(22) Date de dépôt: **20.12.2017**

(51) Int Cl.:
*G01N 15/14* (2006.01)    *G03H 1/04* (2006.01)
*G03H 1/08* (2006.01)    *G06K 9/00* (2006.01)
*G01N 15/00* (2006.01)

(86) Numéro de dépôt international:
**PCT/FR2017/053725**

(87) Numéro de publication internationale:
**WO 2018/115734 (28.06.2018 Gazette 2018/26)**

(54) **PROCÉDÉ DE NUMÉRATION DE PARTICULES DANS UN ÉCHANTILLON PAR IMAGERIE SANS LENTILLE**

VERFAHREN ZUM ZÄHLEN VON PARTIKELN IN EINER PROBE DURCH LINSENLOSE BILDGEBUNG

METHOD FOR COUNTING PARTICLES IN A SAMPLE BY MEANS OF LENSLESS IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663028**

(43) Date de publication de la demande:
**30.10.2019 Bulletin 2019/44**

(73) Titulaires:
• **Commissariat à l'Energie Atomique et aux Energies Alternatives**
**75015 Paris (FR)**
• **Horiba ABX SAS / Horiba Ltd**
**34184 Montpellier cedex 4 (FR)**

(72) Inventeurs:
• **BLANDIN, Pierre**
**38500 Coublevie (FR)**
• **ALI-CHERIF, Anais**
**63000 Clermont Ferrand (FR)**
• **GREMION, Estelle**
**38110 La Tour du Pin (FR)**
• **RAIMBAULT, Sébastien**
**34380 Argelliers (FR)**
• **CIONI, Olivier**
**38100 Grenoble (FR)**
• **DAYNES, Aurélien**
**34090 Montpellier (FR)**

(74) Mandataire: **INNOV-GROUP**
**310, avenue Berthelot**
**69372 Lyon Cedex 08 (FR)**

(56) Documents cités:
WO-A1-2015/195642    WO-A1-2016/151249
US-A1- 2008 137 080    US-A1- 2008 160 566
US-A1- 2012 218 379    US-A1- 2013 308 135

EP 3 559 631 B1

**Description**

**DOMAINE TECHNIQUE**

L'invention est un procédé optique pour la numération de particules, en particulier des cellules sanguines, disposées dans un échantillon à l'aide d'un dispositif d'imagerie sans lentille.

**ART ANTERIEUR**

Dans le domaine de l'hématologie, la numération de cellules sanguines, par exemple les globules rouges ou les globules blancs, est une opération courante. Les laboratoires d'analyse sont équipés d'automates permettant la réalisation d'hémogrammes fiables. Les principes mis en œuvre par ces automates sont des mesures de cytométrie basées sur une variation d'impédance ou une diffusion d'un faisceau lumineux. Cependant, les automates sont généralement chers et leur usage reste cantonné au laboratoire.

Au-delà de l'hématologie, l'identification de particules d'intérêt dans un échantillon et leur comptage sont des opérations couramment pratiquées.

Le document WO2008090330 décrit un dispositif permettant l'observation d'échantillons comportant des cellules par imagerie sans lentille. L'échantillon est disposé entre une source de lumière et un capteur d'image, sans disposer de lentille de grossissement optique entre l'échantillon et le capteur d'image. Ainsi, le capteur d'image collecte une image d'une onde lumineuse transmise par l'échantillon. Cette image, également appelée hologramme, est formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont généralement formées par une succession d'anneaux concentriques. Elles sont parfois dénommées figures de diffraction, ou désignées par le terme anglais « diffraction pattern ». On acquiert ainsi des images, dont le champ d'observation est nettement plus important que celui d'un microscope. Lorsque la concentration en cellules de l'échantillon est suffisamment faible, à chaque cellule peut être associée une figure d'interférence ; leur dénombrement permet la numération des cellules présentes dans l'échantillon. Mais l'hologramme ne permet pas un comptage fiable des cellules lorsque la concentration augmente.

L'hologramme acquis par le capteur d'image peut être traité par un algorithme de reconstruction holographique, de manière à estimer des propriétés optiques de l'échantillon, par exemple une absorption ou une valeur de déphasage de l'onde lumineuse traversant l'échantillon et se propageant vers le capteur d'image. Ce type d'algorithme est bien connu dans le domaine de la reconstruction holographique. Un exemple d'algorithme de reconstruction holographique est décrit dans la publication Ryle et al, « Digital in-line holography of biological specimens », Proc. Of SPIE Vol.6311 (2006). Cependant, de tels algorithmes peuvent donner lieu à l'apparition d'un bruit de reconstruction, désigné par le terme "twin image", sur l'image reconstruite. Leur application nécessite donc certaines précautions. La demande US2012/0218379 décrit un procédé permettant de reconstruire une image complexe d'un échantillon, cette dernière comportant des informations d'amplitude et de phase. La demande US2012/0148141 applique le procédé décrit dans la demande US2012/0218379 pour reconstruire une image complexe de spermatozoïdes et de caractériser leur mobilité. L'imagerie sans lentille a été appliquée dans WO2016/151249 pour analyser un échantillon comportant des cellules.

Une méthode alternative d'observation d'échantillons est la microscopie holographique, par exemple décrite dans US2013/0308135, ou, appliquée à des particules sanguines, dans WO2015/195642, ce dernier décrivant notamment une estimation du volume de globules rouges ou de globules blancs. Les méthodes par microscopie holographique sont relativement complexes à mettre en œuvre. Le document US2008/0160566 propose une alternative simple, visant également une détermination du volume de globules blancs, en formant une image à l'aide d'un dispositif optique standard, les globules blancs étant préalablement marqués à l'aide d'un réactif coloré. Un point commun des méthodes exposées dans les trois documents qui précèdent est un champ d'observation faible.

Les inventeurs ont souhaité proposer une alternative simple et peu onéreuse pour dénombrer des particules d'intérêt dans un échantillon, en tirant profit du champ d'observation important conféré par l'imagerie sans lentille. Appliquée aux échantillons sanguins, l'invention peut constituer une alternative aux automates d'hématologie actuellement disponibles pour la réalisation de numérations de cellules dans du sang. L'invention est notamment adaptée à des échantillons présentant des concentrations élevées en particules, pouvant atteindre plusieurs centaines de milliers de particules par microlitre.

**EXPOSE DE L'INVENTION**

Un objet de l'invention est un procédé de numération de particules, notamment des cellules sanguines disposées dans un échantillon, comportant en particulier les étapes suivantes :

a) illumination de l'échantillon à l'aide d'une source de lumière, la source de lumière émettant une onde lumineuse incidente se propageant vers l'échantillon ;
b) acquisition, à l'aide d'un capteur d'image, d'une image de l'échantillon, formée dans un plan de détection, l'échantillon étant disposé entre la source de lumière et le capteur d'image, chaque image étant représentative d'une onde lumineuse, dite onde lumineuse d'exposition, à laquelle est exposé le capteur d'image sous l'effet de ladite illumination.

Le procédé peut comprendre également les étapes suivantes :

c) application d'un opérateur de propagation à partir de l'image acquise lors de l'étape b), de façon à calculer une expression complexe de l'onde lumineuse d'exposition selon une surface de reconstruction s'étendant face au plan de détection ;
d) formation d'une image, dite image reconstruite, représentative d'une distribution du module et/ou de la phase de l'expression complexe selon la surface de reconstruction ;
e) segmentation de l'image formée lors de l'étape d) pour obtenir une image de segmentation, comportant des régions d'intérêt espacées les unes des autres, tout ou partie des régions d'intérêt étant associées à au moins une particule d'intérêt ;
f) détermination d'une taille de régions d'intérêt et classification desdites régions d'intérêt, en fonction de leur taille, entre au moins une des classes suivantes :

- une classe selon laquelle la région d'intérêt correspond à une unique particule d'intérêt ;
- une classe selon laquelle la région d'intérêt correspond à un nombre prédéterminé, supérieur à 1, de particules d'intérêt ;

g) numération des particules d'intérêt ayant fait l'objet d'une classification lors de l'étape f).

La classification permet une quantification plus précise des particules d'intérêt, par rapport à un simple comptage des régions d'intérêt sélectionnées.
L'étape f) peut comporter, préalablement la classification :

- une détermination d'au moins un critère morphologique pour chaque région d'intérêt;
- une sélection des régions d'intérêt (*ROI*) en fonction du critère morphologique, la classification étant réalisée sur les régions d'intérêt sélectionnées.

Un critère morphologique peut notamment être choisi parmi un diamètre, une taille ou un facteur de forme de chaque région d'intérêt. Plusieurs critères morphologiques peuvent être combinés.
L'étape f) peut comporter une prise en compte d'une taille de référence, et/ou d'une forme de référence, représentative d'un nombre prédéterminé de particules d'intérêt ; la classification est alors réalisée en fonction de ladite taille de référence.
L'étape f) peut comporter les sous-étapes suivantes :

fi) une première classification des régions d'intérêt, réalisée en fonction d'une première taille de référence, la première taille de référence correspondant à un nombre prédéterminé de particules d'intérêt ;
fii) suite la première classification, une détermination d'une deuxième taille de référence, à partir des régions d'intérêt classifiées, lors de la sous-étape fi), comme comportant un nombre prédéfini de particules d'intérêt ;
fiii) une deuxième classification des régions d'intérêt, réalisée en fonction de la deuxième taille de référence ($S_{ref-2}$) déterminée lors de la sous-étape fii).

L'étape f) peut comporter, préalablement la classification :

- un calcul d'un rapport signal à bruit de plusieurs régions d'intérêt ;
- une sélection des régions d'intérêt en fonction du rapport signal à bruit calculé pour chacune d'entre elles, par exemple sur la base d'une comparaison par rapport à un seuil.

la classification étant alors réalisée sur les régions d'intérêt sélectionnées.
L'échantillon peut être mélangé à un réactif de sphérisation préalablement à l'étape b), pour modifier la forme des particules d'intérêt de façon à la rendre sphérique.
L'étape c) peut comporter les sous-étapes suivantes :

ci) définition d'une image initiale de l'échantillon dans le plan de détection, à partir de l'image acquise par le capteur d'image ;

cii) détermination d'une image complexe de l'échantillon dans une surface de reconstruction en appliquant un opérateur de propagation à l'image initiale de l'échantillon définie lors de la sous-étape ci) ou à l'image de l'échantillon, dans le plan de détection, résultant de l'itération précédente ;

ciii) calcul d'un indicateur de bruit à partir de l'image complexe déterminée lors de la sous-étape cii), cet indicateur de bruit dépendant d'un bruit de reconstruction affectant ladite image complexe ;

civ) mise à jour de l'image de l'échantillon dans le plan de détection par un ajustement de valeurs de phase des pixels de ladite image, l'ajustement étant réalisé en fonction d'une variation de l'indicateur calculé lors de la sous-étape ciii) selon lesdites valeurs de phase ;

cv) réitération des sous-étapes cii) à civ) jusqu'à l'atteinte d'un critère de convergence, de façon à obtenir une image complexe de l'échantillon dans le plan détection et dans la surface de reconstruction.

De préférence, aucune optique de formation d'image ou aucune optique de grossissement n'est disposée entre l'échantillon et le capteur d'image.

Les particules d'intérêt peuvent être des cellules sanguines. Selon un mode de réalisation, lors de l'étape d) :

- les particules d'intérêt sont des globules rouges ou des globules blancs, l'image reconstruite étant représentative d'une distribution du module l'expression complexe selon la surface de reconstruction;

- les particules d'intérêt sont des plaquettes, l'image reconstruite étant représentative d'une distribution d'une phase de l'expression complexe selon la surface de reconstruction.

Le procédé peut comporter des caractéristiques reportées dans les revendications annexées. Un autre objet de l'invention est un dispositif pour la numération de particules d'intérêt disposées dans un échantillon, le dispositif comportant :

- une source de lumière apte à émettre une onde lumineuse incidente se propageant vers l'échantillon;

- un support, configuré pour maintenir l'échantillon entre la source de lumière et un capteur d'image ;

un processeur, configuré pour recevoir une image de l'échantillon acquise par le capteur d'image et à mettre en œuvre les étapes c) à g) du procédé tel que décrit dans cette demande. D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif permettant la mise en œuvre de l'invention. La figure 1B représente un autre exemple de dispositif permettant la mise en œuvre de l'invention.

La figure 2A est un logigramme montrant les principales étapes d'un procédé selon l'invention.

La figure 2B montre une image reconstruite dite d'amplitude, l'échantillon comprenant des globules rouges. La figure 2C montre l'image de la figure 2B après segmentation, cette figure montrant plusieurs régions d'intérêt distribuées dans l'image. La figure 2D montre l'image de la figure 2C après classification de chaque région d'intérêt. La figure 2E représente un histogramme du rapport signal à bruit déterminé pour chaque région d'intérêt.

Les figures 3A et 3B représentent des régions d'intérêt respectivement avant et après un seuillage en fonction d'une valeur de rapport signal sur bruit. Les figures 3C et 3D sont des histogrammes des rapports signal à bruit respectivement des images 3A et 3B.

La figure 3E montre les principales étapes d'un mode particulier de réalisation.

La figure 4A illustre les principales étapes d'un procédé permettant d'obtenir une image complexe de l'échantillon, dite image reconstruite, dans un plan de reconstruction. La figure 4B schématise les étapes décrites en lien avec la figure 4A.

Les figures 5A, 5B et 5C sont des courbes représentant des numérations de globules rouges mettant en œuvre l'invention, en utilisant une diode électroluminescente émettant respectivement dans des bandes spectrales bleue, verte et rouge, en fonction de numérations effectuées à l'aide d'une méthode de référence.

La figure 5D est une courbe représentant des numérations de globules rouges mettant en œuvre l'invention en utilisant une source de lumière laser, en fonction de numérations effectuées à l'aide d'une méthode de référence.

La figure 6A montre une image reconstruite dite d'amplitude, l'échantillon comprenant des globules blancs. La figure 6B montre l'image de la figure 6A après segmentation. La figure 6C montre une image reconstruite dite d'amplitude, l'échantillon comprenant des globules blancs.

La figure 6D montre l'image de la figure 6C après segmentation.

La figure 7A montre une image reconstruite dite d'amplitude, l'échantillon comprenant des billes de verre. La figure 7B montre l'image de la figure 7A après segmentation.

Les figures 8A et 8B sont des histogrammes représentant une distribution de rapports signal à bruit de régions d'intérêt correspondant à des globules rouges.

## EXPOSE DE MODES DE REALISATION PARTICULIERS

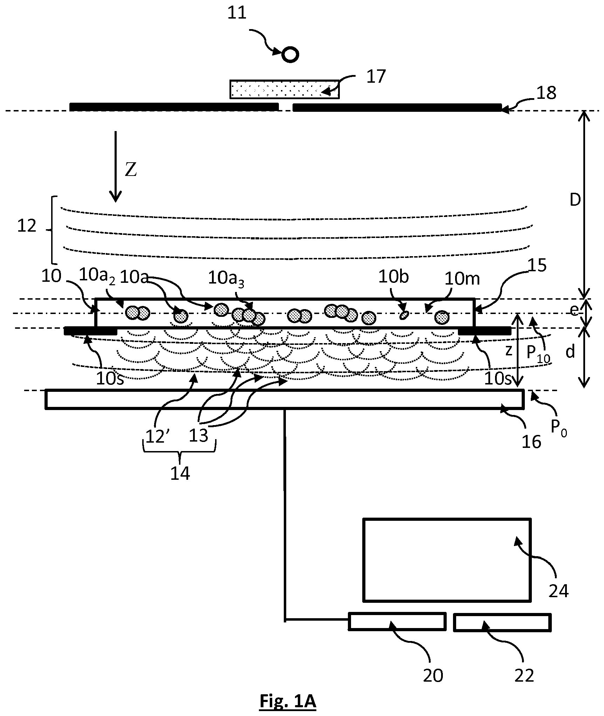

La figure 1A représente un exemple de dispositif selon l'invention. Une source de lumière 11 est apte à émettre une onde lumineuse 12, dite onde lumineuse incidente, se propageant vers un échantillon 10, selon un axe de propagation Z. L'onde lumineuse est émise selon une bande spectrale $\Delta\lambda$.

L'échantillon 10 est un échantillon comportant des particules, parmi lesquelles des particules d'intérêt 10a que l'on souhaite dénombrer. Par particules, on entend par exemple des cellules, et notamment des cellules sanguines, mais il peut également s'agir de microorganismes, des virus, des spores, ou des microbilles, usuellement mises en oeuvre dans des applications biologiques, ou encore des microalgues. Il peut également s'agir de gouttelettes insolubles dans un milieu liquide 10m, par exemple des gouttelettes d'huile dispersées dans une phase aqueuse. De préférence, les particules 10a ont un diamètre, ou sont inscrites dans un diamètre, inférieur à 100 $\mu$m, et de préférence inférieur à 50 $\mu$m ou 20 $\mu$m. De préférence, les particules ont un diamètre, ou sont inscrites dans un diamètre, supérieur à 500 nm ou 1 $\mu$m.

Dans l'exemple représenté sur la figure 1A, l'échantillon comprend un milieu 10m dans lequel baignent les particules d'intérêt 10a. Les particules 10a sont, dans cet exemple, des cellules sanguines, par exemple des globules rouges (érythrocytes) ou des globules blancs (leucocytes). Le milieu 10m, dans lequel baignent les particules, peut notamment être un liquide, par exemple du plasma sanguin, éventuellement dilué.

L'échantillon 10 est, dans cet exemple, contenu dans une chambre fluidique 15. La chambre fluidique 15 est par exemple une chambre fluidique de type Countess ® d'épaisseur e=100 $\mu$m. L'épaisseur e de l'échantillon 10, selon l'axe de propagation Z varie typiquement entre 10 $\mu$m et 1 cm, et est de préférence comprise entre 20 $\mu$m et 500 $\mu$m. L'échantillon 10 s'étend selon un plan $P_{10}$, dit plan de l'échantillon, de préférence perpendiculaire à l'axe de propagation Z. Il est maintenu sur un support 10s à une distance d d'un capteur d'image 16.

La distance D entre la source de lumière 11 et l'échantillon 10 est de préférence supérieure à 1 cm. Elle est de préférence comprise entre 2 et 30 cm. Avantageusement, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. La source de lumière 11 peut être une diode électroluminescente comme représenté sur la figure 1A. Elle peut être associée à un diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée en regard de l'échantillon 10.

Le dispositif peut comporter un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par la source de lumière selon un cône d'angle a. De préférence, l'angle de diffusion $\alpha$ varie entre 10° et 80°. La présence d'un tel diffuseur permet de rendre le dispositif plus tolérant à l'égard d'un décentrage de la source de lumière par rapport au diaphragme, et d'homogénéiser l'éclairage de l'échantillon. Le diaphragme n'est pas nécessaire, en particulier lorsque la source de lumière est suffisamment ponctuelle, notamment lorsqu'il s'agit d'une source laser.

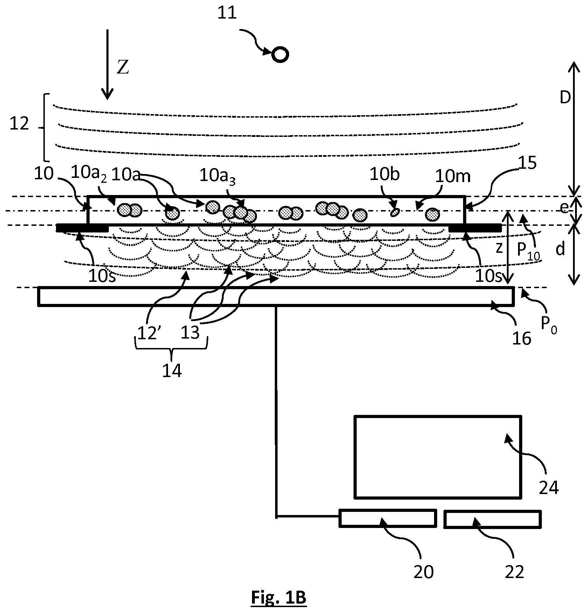

La source de lumière 11 peut être une source laser, telle une diode laser. Dans ce cas, il n'est pas utile de lui associer un filtre spatial 18 ou un diffuseur 17. Une telle configuration est représentée sur la figure 1B.

De préférence, la bande spectrale d'émission $\Delta\lambda$ de l'onde lumineuse incidente 12 a une largeur inférieure à 100 nm. Par largeur de bande spectrale, on entend une largeur à mi-hauteur de ladite bande spectrale.

L'échantillon 10 est disposé entre la source de lumière 11 et le capteur d'image 16 précédemment évoqué. Ce dernier s'étend de préférence parallèlement, ou sensiblement parallèlement au plan $P_{10}$ selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise. Le capteur d'image 16 est apte à former une image $I_0$ selon un plan de détection $P_0$. Dans l'exemple représenté, il s'agit d'un capteur d'image comportant une matrice de pixels, de type CCD ou un CMOS. Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est avantageusement comprise entre 50 $\mu$m et 2 cm, de préférence comprise entre 100 $\mu$m et 2 mm.

On remarque l'absence d'optique de formation d'image, telle qu'une optique de grossissement, entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image.

Sous l'effet de l'onde lumineuse incidente 12, les particules présentes dans l'échantillon peuvent engendrer une onde diffractée 13, susceptible de produire, au niveau du plan de détection $P_0$, des interférences avec une partie 12' de l'onde lumineuse incidente 12 transmise par l'échantillon. Par ailleurs, l'échantillon peut absorber une partie de l'onde lumineuse incidente 12. Ainsi, l'onde lumineuse 14, dite onde lumineuse d'exposition, transmise par l'échantillon 10 et à laquelle est exposé le capteur d'image 16, peut comprendre :

- une composante 13 résultant de la diffraction de l'onde lumineuse incidente 12 par chaque particule de l'échantillon ;
- une composante 12' résultant de la transmission de l'onde lumineuse incidente 12 par l'échantillon.

Ces composantes forment des interférences dans le plan de détection. Aussi, l'image $I_0$ acquise par le capteur d'image 16 comporte des figures d'interférences (ou figures de diffraction), chaque figure d'interférence étant générée par une particule 10a de l'échantillon 10.

Un processeur 20, par exemple un microprocesseur, est configuré pour traiter chaque image $I_0$ acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Comme indiqué en relation avec l'art antérieur, une image $I_0$ acquise sur le capteur d'image 16, également appelée hologramme, ne permet pas d'obtenir une représentation suffisamment précise de l'échantillon observé. On peut appliquer, à chaque image acquise par le capteur d'image, un opérateur de propagation h, de façon à calculer une grandeur représentative de l'onde lumineuse d'exposition 14. Un tel procédé, désigné par le terme reconstruction holographique, permet notamment de reconstruire une image du module ou de la phase de cette onde lumineuse 14 dans un plan de reconstruction parallèle au plan de détection $P_0$, et notamment dans le plan $P_{10}$ selon lequel s'étend l'échantillon. Pour cela, on effectue un produit de convolution de l'image $I_0$ acquise par le capteur d'image 16 par un opérateur de propagation h. Il est alors possible de calculer une expression complexe A de l'onde lumineuse 14 en tout point de coordonnées (x, y, z) de l'espace, et en particulier selon une surface de reconstruction s'étendant face au capteur d'image. La surface de reconstruction peut notamment être un plan de reconstruction $P_z$ situé à une distance |z| du capteur d'image 16, et notamment le plan $P_{10}$ de l'échantillon, avec :

$$A(x, y, z) = I_0(x, y, z) * h,$$

*désignant l'opérateur produit de convolution.

Dans la suite de cette description, les coordonnées (x,y) désignent une position radiale dans un plan perpendiculaire à l'axe de propagation Z. La coordonnée z désigne une coordonnée selon l'axe de propagation Z.

L'expression complexe A est une grandeur complexe dont l'argument et le module sont respectivement représentatifs de la phase et de l'intensité de l'onde lumineuse 14 à laquelle est exposé le capteur d'image 16. Le produit de convolution de l'image $I_0$ par l'opérateur de propagation h permet d'obtenir une image complexe $A_z$ représentant une distribution spatiale de l'expression complexe A dans le plan de reconstruction $P_z$, s'étendant à une coordonnée z du plan de détection $P_0$. Dans cet exemple, le plan de détection $P_0$ a pour équation z = 0. L'image complexe $A_z$ correspond à une image complexe de l'échantillon dans le plan de reconstruction $P_z$. Elle représente également une distribution spatiale bidimensionnelle des propriétés optiques de l'onde lumineuse d'exposition 14. L'opérateur de propagation h a pour fonction de décrire la propagation de la lumière entre le capteur d'image 16 et un point de coordonnées (x,y,z), situé à une distance |z| du capteur d'image. Il est alors possible de déterminer le module $M(x,y,z)$ et/ou la phase $\varphi(x,y,z)$ de l'onde lumineuse d'exposition 14, à cette distance |z|, dite distance de reconstruction, avec :

-
$$M(x, y, z) = abs\,[A(x, y, z)]\,(1)\,;$$

-
$$\varphi(x, y, z) = arg\,[A(x, y, z)]\,(2).$$

Les opérateurs *abs* et *arg* désignent respectivement le module et l'argument.

Autrement dit, l'expression complexe A de l'onde lumineuse d'exposition 14 en tout point de coordonnées

$(x, y, z)$ de l'espace est telle que: $A(x, y, z) = M(x, y, z)e^{j\varphi(x,y,z)}$ (3). Il est possible de former des images $M_z$ et $\varphi_z$ représentant respectivement une distribution du module ou de la phase de l'expression complexe A dans une surface s'étendant face au plan de détection $P_0$. Une telle surface peut notamment être un plan $P_z$ situé à une distance $|z|$ du plan de détection $P_0$, avec $M_z$ = abs ($A_z$) et $\varphi_z$ = arg($A_z$). La surface précédemment évoquée n'est pas forcément plane, mais elle s'étend sensiblement parallèlement au plan de détection et est de préférence un plan $P_z$ parallèle au plan de détection. Dans la suite de la description, l'image obtenue à partir du module et/ou de la phase de l'image complexe $A_z$ est désignée par le terme "image reconstruite" et est notée $I_z$.

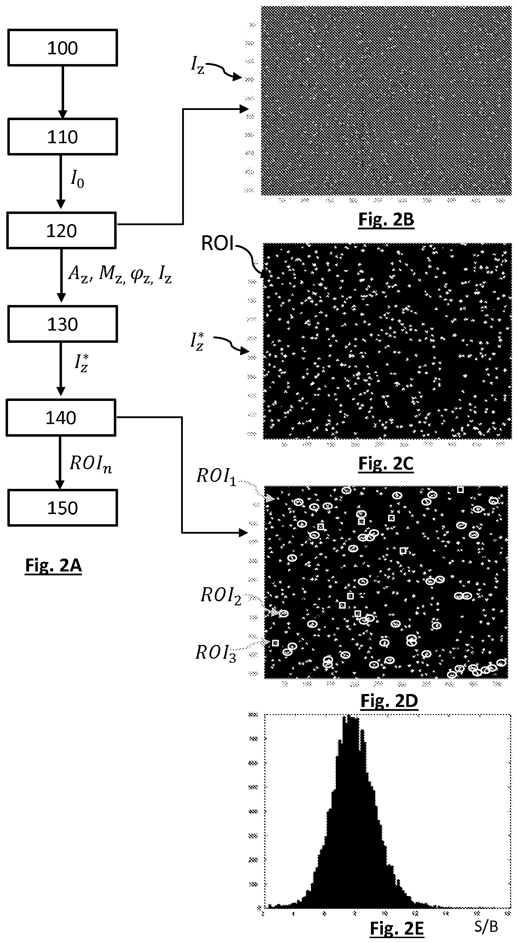

Les inventeurs ont mis au point un procédé de numération des particules 10a présentes dans l'échantillon selon un procédé décrit en lien avec les figures 2A à 2E. Les principales étapes de ce procédé sont décrites ci-après.

Etape 100 : illumination de l'échantillon. Au cours de cette étape, l'échantillon est illuminé par la source de lumière 11.

Etape 110 : acquisition d'une image $I_0$ de l'échantillon 10 par le capteur d'image 16, cette image formant un hologramme. Un des intérêts de la configuration sans lentille, représentée sur les figures 1A ou 1B, est le large champ observé, permettant d'adresser simultanément un volume d'échantillon élevé. Le champ observé dépend de la taille du capteur, en étant légèrement inférieur à la surface de détection de ce dernier, du fait de l'espacement entre le capteur et l'échantillon. Le champ observé est généralement supérieur à 10 mm², voire 20 mm².

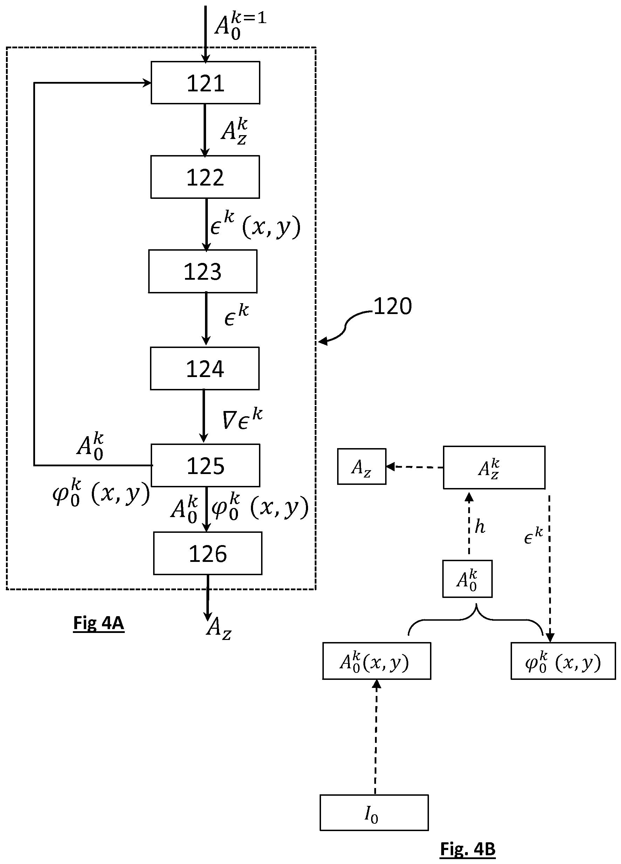

Etape 120 : calcul d'une image complexe $A_Z$ dans un plan de reconstruction $P_Z$. L'image complexe comporte des informations de phase et d'amplitude de l'onde lumineuse d'exposition 14 à laquelle est exposé le capteur d'image 16. Le plan de reconstruction est le plan $P_{10}$ selon lequel s'étend l'échantillon. L'étape 120 peut être effectuée en appliquant l'opérateur de propagation $h$, précédemment décrit, à une image issue de l'image acquise $I_0$. Cependant, l'application de l'opérateur de propagation à l'image acquise peut aboutir à une image complexe $A_Z$ affectée d'un bruit de reconstruction important, fréquemment désigné par le terme twin image. Afin d'obtenir une image complexe exploitable, en limitant le bruit de reconstruction, des algorithmes itératifs peuvent être mis en œuvre. Un de ces algorithmes est décrit par la suite, en lien avec les figures 4A et 4B.

A partir de l'image complexe $A_Z$, on peut obtenir une image reconstruite $I_Z$ à partir du module $M_z$ et/ou de la phase $\varphi_z$ de l'onde lumineuse d'exposition 14, dans le plan de reconstruction $P_Z$. La distance de reconstruction par rapport au capteur d'image 16 est déterminée soit a priori, connaissant la position de l'échantillon 10 par rapport au capteur d'image 16, soit sur la base d'un algorithme de focalisation numérique, selon lequel la distance de reconstruction optimale est celle pour laquelle l'image reconstruite $I_Z$ est la plus nette. Les algorithmes de focalisation numérique sont connus de l'homme du métier.

La figure 2B est un exemple d'une partie d'une image reconstruite $I_Z$ à partir du module $M_z$ d'une image complexe $A_Z$ obtenue selon un procédé mettant en œuvre les étapes décrites en lien avec les figures 4A et 4B. Sur cette figure, le contraste a été inversé. Les particules d'intérêt 10a que l'on souhaite dénombrer sont des globules rouges. Ils apparaissent sous la forme de régions d'intérêt ROI distribuées dans l'image reconstruite et isolées les unes des autres. L'échantillon et les conditions expérimentales sont décrits plus précisément ci-après, en lien avec les essais expérimentaux.

Etape 130 : segmentation. L'image formée au cours de l'étape 120 fait l'objet d'une segmentation, de façon à isoler les régions d'intérêt ROI correspondant à des particules. Par segmentation d'image, on entend une partition de l'image de façon à regrouper les pixels, par exemple en fonction de leur intensité. La segmentation d'image aboutit à une image de segmentation $I_z^*$ dans laquelle les régions d'intérêt ROI, espacées les unes des autres, sont délimitées, chaque région d'intérêt pouvant correspondre à une particule, ou à un amas de particules comme décrit par la suite. Différentes méthodes de segmentation sont connues de l'homme du métier. On peut par exemple appliquer un seuillage d'Otsu, consistant à déterminer une valeur d'un seuil d'intensité à partir de l'histogramme de l'image, le seuil permettant une séparation optimale des pixels selon deux classes : une classe de pixels représentant les régions d'intérêt et une classe de pixels représentant le fond de l'image. La figure 2C représente le résultat d'une segmentation de l'image de la figure 2B en appliquant un seuillage selon l'algorithme d'Otsu. L'image obtenue est binarisée, les pixels représentant le fond de l'image étant sombres (niveau de gris minimal) tandis que les pixels représentant chaque zone d'intérêt ROI sont clairs (niveau de gris maximal).

Dans cet exemple, l'image de segmentation $I_z^*$ issue de cette étape résulte d'une segmentation de l'image $M_z$ du module de l'amplitude complexe $A_z$ de l'onde lumineuse d'exposition 14. En variante, l'image issue de cette étape résulte d'une segmentation de l'image $\varphi_z$ de la phase de l'onde lumineuse d'exposition. L'image de segmentation $I_z^*$ peut également combiner les régions d'intérêt apparaissant suite aux segmentations respectives de l'image $M_z$ du module ainsi que de l'image $\varphi_z$ de la phase de l'onde lumineuse d'exposition.

Une numération des particules d'intérêt par un simple comptage des régions d'intérêt apparaissant sur l'image de segmentation $I_z^*$ peut donner un premier ordre de grandeur sur la quantité des particules d'intérêt. Mais les inventeurs ont constaté qu'une telle numération donnait des résultats peu précis. En effet, certaines régions d'intérêt correspondent à des particules différentes des particules que l'on souhaite dénombrer. Par ailleurs, certaines régions d'intérêt rassemblent plusieurs particules d'intérêt, ces dernières formant des amas. Cela provient du fait que certaines particules d'intérêt sont proches les unes des autres, et sont confondues dans une même région d'intérêt. Sur les figures 1A et 1B, on a schématisé des amas $10a_2$ comportant deux particules et des amas $10a_3$ comportant trois particules. Ces causes d'erreur sont traitées dans les étapes décrites ci-après.

Etape 140 : sélection. Au cours de cette étape, on effectue une sélection des régions d'intérêt déterminées lors de l'étape précédente en fonction de leur morphologie, c'est-à-dire en fonction d'un critère morphologique, ce dernier pouvant être l'aire, la forme ou la taille. Cela permet de sélectionner les régions d'intérêt correspondant aux particules d'intérêt que l'on souhaite dénombrer.

Cette étape peut comprendre un filtrage de chaque région d'intérêt en fonction du critère morphologique précédemment évoqué, de façon à sélectionner des régions d'intérêt représentatives des particules d'intérêt. Par exemple, lorsque les particules d'intérêt sont des globules rouges, le filtrage permet de sélectionner les régions d'intérêt présentant un diamètre inférieur à 100 μm, ou inscrites dans un tel diamètre. Cela permet de ne pas prendre en compte des grosses poussières ou des traces, tout en conservant des amas de globules rouges.

Afin de prendre en compte des effets d'agglutination entre des particules d'intérêt, une classification des régions d'intérêt sélectionnées peut être réalisée en fonction de leur aire et/ou de leur forme, notamment en se basant sur une taille de référence $S_{ref}$, par exemple une aire de référence, cette dernière étant par exemple représentative d'une région d'intérêt correspondant à une particule d'intérêt unique (singulet). L'aire de référence peut être prédéterminée ou obtenue à partir de l'image de segmentation $I_z^*$, par exemple en calculant une moyenne, ou une médiane, de l'aire de chaque région d'intérêt ROI, et en faisant l'hypothèse que la majorité des régions d'intérêt correspondent à une particule unique. La taille de chaque région d'intérêt est ensuite comparée à taille de référence $S_{ref}$, en fonction de quoi chaque région d'intérêt est affectée d'un nombre de particules. Par taille, on entend un diamètre ou une aire ou une autre dimension caractéristique. Par exemple, en lien avec la figure 2D :

- lorsque la taille d'une région d'intérêt est comprise entre 0.5 fois et 1.5 fois la taille de référence $S_{ref}$, on considère que la région d'intérêt représente une seule particule d'intérêt, ce qui correspond à un singulet, une telle région d'intérêt étant notée $ROI_1$. Sur la figure 2D, les singulets sont représentés par des points blancs.
- Lorsque la taille d'une région d'intérêt est comprise entre 1.5 fois et 2.5 fois la taille de référence $S_{ref}$, on considère que la région d'intérêt représente deux particules d'intérêt ; sur la figure 2D, une telle région d'intérêt $ROI_2$, correspondant à un doublet, est symbolisée par un contour ovale blanc.
- Lorsque la taille d'une région d'intérêt est comprise entre 2.5 fois et 3.5 fois la taille de référence $S_{ref}$, on considère que la région d'intérêt représente trois particules ; sur la figure 2D, une telle région d'intérêt $ROI_3$ est symbolisée par un cadre blanc.

La notation $ROI_n$ correspond à une région d'intérêt considérée, suite à l'étape de classification, comme comportant de $n$ particule(s), $n$ étant un entier strictement positif.

De façon alternative ou complémentaire, préalablement à la classification, une sélection peut être réalisée en fonction de la forme de chaque région d'intérêt. Par exemple, on détermine, pour chaque région d'intérêt, un plus grand diamètre et un plus petit diamètre. Le ratio entre le plus grand diamètre et le plus petit diamètre permet de quantifier un facteur de forme de la région d'intérêt considérée. Selon cette sélection, on peut identifier les régions d'intérêt dont la forme ne peut pas être considérée comme sphérique, ces régions d'intérêt n'étant pas considérées comme représentatives de particules d'intérêt et n'étant pas prises en compte dans la numération. Ainsi, la sélection peut comprendre une comparaison entre la forme de chaque région d'intérêt et une forme représentative de la particule d'intérêt, ou d'amas de particules d'intérêt, à détecter.

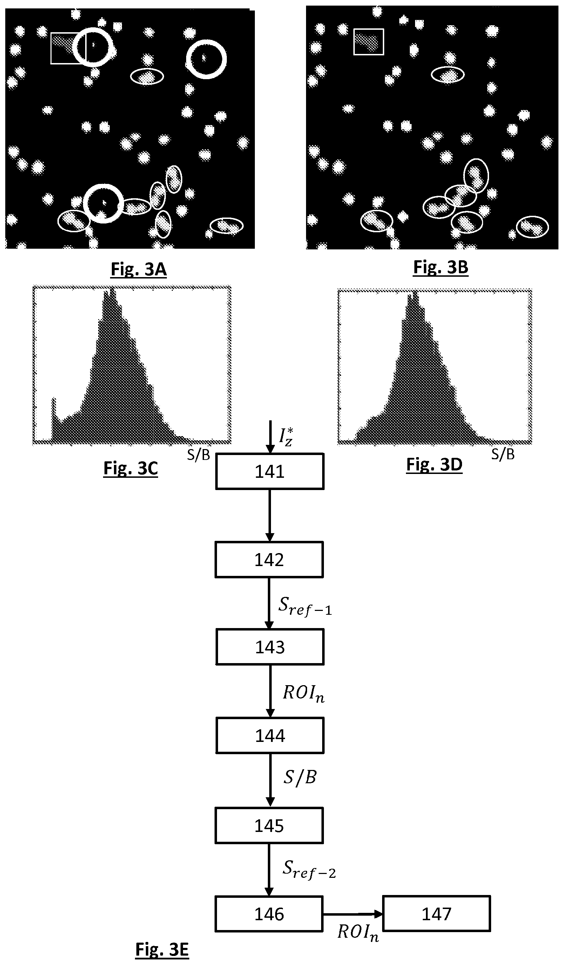

Pour chaque région d'intérêt présente dans l'image de segmentation $I_z^*$, un rapport signal sur bruit S/B peut être établi. Un tel rapport signal sur bruit peut être calculé en effectuant un rapport entre une valeur moyenne de pixels, dits centraux, situés au centre de la région d'intérêt, par exemple 9 pixels centraux, et l'écart-type calculé sur un fond de l'image, le fond de l'image correspondant à l'image reconstruite sans les régions d'intérêt. La figure 2E est un histogramme des valeurs des rapports S/B calculés pour les différentes régions d'intérêt identifiées sur l'échantillon illustré sur les figures 2C et 2D. La plupart des régions d'intérêt présentent un rapport S/B supérieur à 4, ce qui traduit une détection fiable et un bon degré de confiance dans la sélection des régions d'intérêt, présageant une numération fiable. L'étape 140 peut également comporter un filtrage de régions d'intérêt en fonction de leur rapport signal à bruit S/B. En effet, en dessous d'un certain seuil, on considère que le rapport signal sur bruit est trop faible pour qu'on puisse effectivement considérer qu'une région d'intérêt corresponde à une particule. Les figures 3A et 3B représentent un exemple de filtrage de régions d'intérêt sur la base d'une valeur seuil du rapport signal sur bruit égal à 1.5. Comme on peut le voir sur les histogrammes des rapport signal à bruit des régions d'intérêt représentées sur les figures 3A et 3B, lesdits histogrammes faisant respectivement l'objet des figures 3C et 3D, le seuillage permet d'éliminer les régions d'intérêt à faible rapport signal sur bruit, ces dernières étant entourées par un cercle épais sur la figure 3A. Les régions d'intérêt à faible rapport S/B n'apparaissent pas sur la figure 3B. Dans cet exemple, le filtrage de régions d'intérêt sur la base du rapport S/B a été limité aux singulets. Sur les figures 3A et 3B, de même que sur la figure 2D, les doublets sont entourés par un contour ovale et les triplets sont entourés par un contour carré.

Selon un mode de réalisation, l'étape 140 peut comporter la succession d'opérations suivantes, décrites en lien avec la figure 3E

- étape 141 : filtrage de chaque région d'intérêt *ROI* selon une plage de diamètre représentative des particules d'intérêt, par exemple 3 $\mu$m - 12 $\mu$m dans le cas de globules rouges, et selon un critère de forme.
- étape 142 : calcul d'une taille moyenne des régions d'intérêt résultant de ce filtrage, cette taille moyenne constituant une première taille de référence $S_{ref\text{-}1}$;
- étape 143 : classification de chaque région d'intérêt *ROI* de l'image de segmentation, sur la base de la première taille de référence $S_{ref\text{-}1}$, de façon à affecter un nombre entier *n* de particules à chaque région d'intérêt $ROI_n$;
- étape 144 : calcul d'un rapport signal sur bruit S/B de chaque région d'intérêt $ROI_1$ considérée comme étant un singulet ;
- étape 145 : calcul d'une taille moyenne des singulets $ROI_1$ présentant un rapport signal sur bruit suffisant, c'est-à-dire supérieur à un seuil, le seuil pouvant être égal à 1.5, cette taille moyenne constituant une deuxième taille de référence $S_{ref\text{-}2}$ ;
- étape 146 : classification de chaque région d'intérêt ROI de l'image de segmentation, sur la base de la deuxième taille de référence $S_{ref\text{-}2}$ résultant de l'étape 145 ;
- étape 147 : affectation, à chaque région d'intérêt *ROI,* d'un nombre de particules *n* déterminé durant la classification.

Cet algorithme permet un ajustement progressif de la taille de référence sur la base de laquelle la classification des régions d'intérêt est réalisée. Cela permet d'obtenir une classification plus précise.

Ainsi, l'étape 140 permet de sélectionner les régions d'intérêt représentatives des particules d'intérêt, et/ou d'attribuer un nombre de particule(s) à chaque région d'intérêt considérée comme représentative de particules d'intérêt.

Etape 150 : numération. Au cours de cette étape, on dénombre les régions d'intérêt sélectionnées lors de l'étape 140, c'est-à-dire considérées comme représentatives de particules, en tenant compte d'un nombre de particules éventuellement attribué à chacune d'entre elles. L'étape 120 décrite ci-dessus peut être réalisée en effectuant une convolution entre un opérateur de propagation et l'image acquise par le capteur d'image. Cependant, l'application d'un tel opérateur peut engendrer un bruit de reconstruction significatif. Afin d'optimiser la reconstruction, en limitant le bruit de reconstruction, l'étape 120 peut être mise en œuvre selon un algorithme tel que décrit dans la demande de brevet FR1652500 déposée le 23 mars 2016. On va décrire à présent, en lien avec les figures 4A et 4B, les principales étapes de cet algorithme. Il s'agit d'un algorithme itératif, les étapes 121 à 125 décrites ci-dessous étant réitérées, k désignant le rang d'une itération. Ce procédé vise à déterminer la phase de l'onde lumineuse d'exposition 14 dans le plan de détection $P_0$, de façon à obtenir progressivement une estimation de l'amplitude complexe $A_0 = A_{z=0}$ dans le plan de détection. Lors de chaque itération *k,* l'image complexe dans le plan de détection obtenue au cours d'une itération précédente, notée $A_0^{k-1}$, est propagée dans le plan de reconstruction $P_z$, pour former une image complexe $A_z^k$ dans le plan de reconstruction $P_z$. Chaque itération consiste à ajuster la phase $\varphi_0^k$ de l'image complexe $A_0^k$ dans le plan de détection $P_0$ en fonction d'un critère de bruit $\varepsilon^k$ déterminé à partir de l'image complexe $A_z^k$.

Etape 121: propagation du plan de détection vers le plan de reconstruction

Au cours de cette étape, on dispose de l'image formée dans le plan de détection $P_0$. Au cours de la première itération, on détermine une image initiale $A_0^{k=0}$ à partir de l'image $I_0$ acquise par le capteur d'image. Le module $M_0^{k=0}$ de l'image initiale $A_0^{k=0}$ peut être obtenu en appliquant l'opérateur racine carrée à l'image acquise $I_0$ par le capteur

d'image, auquel cas $M_0^{k=0} = \sqrt{I_0}$. On attribue une valeur arbitraire, par exemple 0, à la phase $\varphi_0^{k=0}$ de l'image initiale. Lors des itérations suivantes, l'image dans le plan de détection est l'image complexe $A_0^{k-1}$ résultant de l'itération précédente. L'image formée dans le plan de détection $P_0$ est propagée dans le plan de reconstruction $P_z$, par l'application d'un opérateur de propagation $h$ tel que précédemment décrit, de façon à obtenir une image complexe $A_z^k$, représentative de l'échantillon 10, dans le plan de reconstruction $P_z$. La propagation est réalisée par convolution de l'image $A_0^{k-1}$ par l'opérateur de propagation $h_{-z}$, de telle sorte que :

$$A_z^k = A_0^{k-1} * h_{-z},$$

L'indice $-z$ représente le fait que la propagation est réalisée dans un sens opposé à l'axe de propagation Z. On parle de rétropropagation.

Etape 122 : Calcul d'un indicateur en plusieurs pixels

Au cours de cette étape, on calcule une grandeur $\varepsilon^k(x,y)$ associée à chaque pixel d'une pluralité de pixels $(x,y)$ de l'image complexe $A_z^k$, et de préférence en chacun de ses pixels. Cette grandeur dépend de la valeur $A_z^k(x,y)$ de l'image $A_z^k$, ou de son module, au pixel (x,y) à laquelle elle est calculée. Elle peut également dépendre d'une dérivée dimensionnelle de l'image en ce pixel, par exemple le module d'une dérivée dimensionnelle de cette image. Dans cet exemple, la grandeur $\varepsilon^k(x,y)$ associée à chaque pixel est un module d'une différence de l'image $A_z^k$, en chaque pixel, et la valeur 1. Une telle grandeur peut être obtenue selon l'expression :

$$\varepsilon^k(x,y) = \sqrt{\left( A_z^k(x,y) - 1 \right)\left( A_z^k(x,y) - 1 \right)^*} = \left| A_z^k(x,y) - 1 \right|$$

Etape 123 : établissement d'un indicateur de bruit associé à l'image $A_z^k$.

Lors de l'étape 122, on calcule des grandeurs $\varepsilon^k(x,y)$ en plusieurs pixels de l'image complexe $A_z^k$. Ces grandeurs peuvent former un vecteur $\mathbf{E}^k$, dont les termes sont les grandeurs $\varepsilon^k(x,y)$ associées à chaque pixel $(x,y)$. Dans l'étape 123, on calcule un indicateur, dit indicateur de bruit, à partir d'une norme du vecteur $\mathbf{E}^k$. La grandeur $\varepsilon^k(x,y)$ calculée à partir de l'image complexe $A_z^k$, à chaque pixel $(x,y)$ de cette dernière, est sommée de façon à constituer un indicateur de bruit $\varepsilon^k$ associé à l'image complexe $A_{ref}^k$.

Ainsi,

$$\varepsilon^k = \sum_{(x,y)} \varepsilon^k(x,y)$$

Un aspect important de cette étape consiste à déterminer, dans le plan de détection $P_0$, des valeurs de phase $\varphi_0^k(x,y)$ de chaque pixel de l'image $A_0^k$ dans le plan de l'échantillon, permettant d'obtenir, lors d'une itération suivante, une image reconstruite $A_z^{k+1}$ dont l'indicateur de bruit $\varepsilon^{k+1}$ est inférieur à l'indicateur de bruit $\varepsilon^k$.

Lors de la première itération, on ne dispose que d'une information pertinente sur l'intensité de l'onde lumineuse d'exposition 14, mais non sur sa phase. La première image reconstruite $A_z^{k=1}$ dans le plan de reconstruction $P_z$ est donc affectée d'un bruit de reconstruction important, du fait de l'absence d'information pertinente quant à la phase de l'onde lumineuse 14 dans le plan de détection $P_0$. Par conséquent, l'indicateur $\varepsilon^{k=1}$ est élevé. Au cours des itérations suivantes, l'algorithme procède à un ajustement progressif de la phase $\varphi_0^k(x, y)$ dans le plan de détection $P_0$, de façon à minimiser progressivement l'indicateur $\varepsilon^k$.

L'image $A_0^k$ dans le plan de détection est représentative de l'onde lumineuse 14 dans le plan de détection $P_0$, aussi bien du point de vue de son intensité que de sa phase. Les étapes 120 à 125 visent à établir, de façon itérative, la valeur de la phase $\varphi_0^k(x, y)$ de chaque pixel de l'image $A_0^k$, minimisant l'indicateur $\varepsilon^k$, ce dernier étant obtenu sur l'image $A_z^k$ obtenue par propagation de l'image $A_0^{k-1}$ dans le plan de reconstruction $P_z$.

L'algorithme de minimisation peut être un algorithme de descente de gradient, ou de descente de gradient conjugué, ce dernier étant décrit ci-après.

Etape 124 : Ajustement de la valeur de la phase dans le plan de détection.

L'étape 124 vise à déterminer une valeur de la phase $\varphi_0^k(x, y)$ de chaque pixel de l'image complexe $A_0^k$ de façon à minimiser l'indicateur $\varepsilon^{k+1}$ résultant d'une propagation de l'image complexe $A_0^k$ dans le plan de reconstruction $P_z$, au cours de l'itération suivante $k+1$. Pour cela, un vecteur de phase $\boldsymbol{\varphi_0^k}$ est établi, dont chaque terme est la phase $\varphi_0^k(x, y)$ d'un pixel $(x,y)$ de l'image complexe $A_0^k$. La dimension de ce vecteur est ($N_{pix}$, 1), où $N_{pix}$ désigne le nombre de pixels considérés. Ce vecteur est mis à jour au cours de chaque itération, par l'expression de mise à jour suivante :

$$\varphi_0^k(x, y) = \varphi_0^{k-1}(x, y) + \alpha^k p^k(x, y)$$

où:

- $\alpha^k$ est un entier, désigné par le terme « pas », et représentant une distance ;
- $\boldsymbol{p^k}$ est un vecteur de direction, de dimension ($N_{pix}$, 1), dont chaque terme $p(x, y)$ forme une direction du gradient $\nabla \varepsilon^k$ de l'indicateur $\varepsilon^k$.

Cette équation peut être exprimée sous forme vectorielle, comme suit :

$$\boldsymbol{\varphi_0^k} = \boldsymbol{\varphi_0^{k-1}} + \alpha^k \boldsymbol{p^k}$$

On peut montrer que :

$$\boldsymbol{p^k} = -\boldsymbol{\nabla \varepsilon^k} + \beta^k \boldsymbol{p^{k-1}}$$

où :

- $\nabla \varepsilon^{\boldsymbol{k}}$ est un vecteur de gradient, de dimension ($N_{pix}$, 1), dont chaque terme représente une variation de l'indicateur $\varepsilon^k$ en fonction de chacun des degrés de liberté des inconnues du problème, c'est-à-dire les termes du vecteur $\boldsymbol{\varphi_0^k}$ ;
- $\boldsymbol{p^{k-1}}$ est un vecteur de direction établi lors de l'itération précédente ;
- $\beta^k$ est facteur d'échelle appliqué au vecteur de direction $\boldsymbol{p^{k-1}}$.

Chaque terme $\nabla \varepsilon^k(x,y)$ du vecteur de gradient $\nabla \varepsilon$, est tel que

$$\nabla \varepsilon^k (r') = \frac{\partial \varepsilon^k}{\partial \varphi_0^k (r')} = \mathrm{Im}\left(A_0^{k^*}\right)(r') \cdot \left(\frac{\left(A_{ref}^k - 1\right)}{\left|A_{ref}^k - 1\right|} * h_z\right)(r')$$

où Im représente l'opérateur partie imaginaire et *r'* représente une coordonnée (*x,y*) dans le plan de détection.

Le facteur d'échelle $\beta^k$ peut être exprimé de telle sorte que :

$$\beta^{(k)} = \frac{\nabla \varepsilon^{(k)} \cdot \nabla \varepsilon^{(k)}}{\nabla \varepsilon^{(k-1)} \cdot \nabla \varepsilon^{(k-1)}}$$

Le pas $\alpha^k$ peut varier selon les itérations, par exemple entre 0.03 au cours des premières itérations et 0.0005 lors des dernières itérations.

L'équation de mise à jour permet d'obtenir un ajustement du vecteur $\varphi_0^k$, ce qui entraîne une mise à jour itérative de la phase $\varphi_0^k(x,y)$ en chaque pixel de l'image complexe $A_0^k$. Cette image complexe $A_0^k$, dans le plan de détection, est alors mise à jour par ces nouvelles valeurs de la phase associées à chaque pixel.

Etape 125 : Réitération ou sortie d'algorithme.

Tant qu'un critère de convergence n'est pas atteint, l'étape 125 consiste à réitérer l'algorithme, par une nouvelle itération des étapes 121 à 125 sur la base de l'image complexe $A_0^k$ mise à jour lors de l'étape 124. Le critère de convergence peut être un nombre K prédéterminé d'itérations, ou une valeur minimale du gradient $\nabla \varepsilon^k$ de l'indicateur, ou une différence considérée comme négligeable entre deux vecteurs de phase $\varphi_0^{k-1}$, $\varphi_0^k$ consécutifs. Lorsque le critère de convergence est atteint, on dispose d'une estimation considérée comme correcte d'une image complexe de l'échantillon dans le plan de détection $P_0$.

Etape 126 : Obtention de l'image complexe dans le plan de reconstruction.

A l'issue de la dernière itération, le procédé comprend une propagation de l'image complexe $A_0^k$ résultant de la dernière itération dans le plan de reconstruction $P_z$, de manière à obtenir une image complexe dans le plan de reconstruction $A_z = A_z^k$. $A_z$

Essais expérimentaux

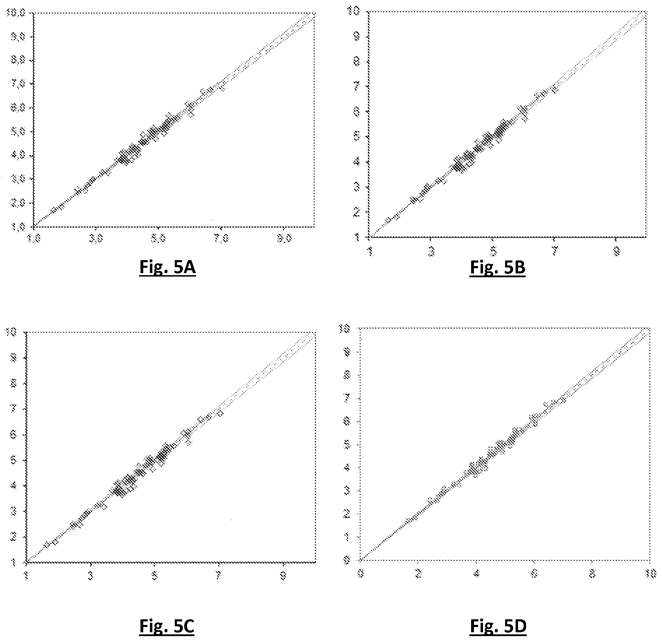

Au cours d'une première série d'essais, le procédé préalablement décrit a été utilisé sur des échantillons de sang dilué pour dénombrer les globules rouges. Les figures 5A à 5D représentent les résultats obtenus par le procédé en fonction de valeurs issues d'un automate d'hématologie ABX Pentra 120 DX. Les conditions expérimentales sont les suivantes :

- échantillon 10 : sang dilué contenu dans une chambre fluidique Countess® d'épaisseur 100 $\mu$m, le volume examiné atteignant 3 mm$^3$, soit 3 $\mu$l.
- source de lumière 11 : diode électroluminescente Cree MC-E Color, comportant trois diodes électroluminescentes émettant respectivement dans les bandes spectrales $\Delta\lambda$ suivantes : 450 nm - 465 nm ; 520 nm - 535 nm ; 630 nm - 640 nm. Dans cet exemple, une seule diode est activée lors de chaque illumination. Alternativement, une diode laser émettant à une longueur d'onde de 405 nm a été utilisée, selon le mode de réalisation représenté sur la figure 1B.
- capteur d'image : Capteur CMOS IDS $\mu$Eye monochrome 3840 x 2748 pixels, chaque pixel mesurant 1.67 $\mu$m de côté, la surface de détection s'étendant sur environ 30 mm$^2$;
- distance D entre la source de lumière 11 et l'échantillon 10 : 8 cm lorsque la source de lumière 11 est la diode électroluminescente et 15 cm lorsque la source de lumière est la diode laser

- distance d entre l'échantillon 10 et le capteur d'image 16 : 1500 $\mu$m ;
- épaisseur e de la chambre fluidique 15 : 100 $\mu$m ;
- diamètre de l'ouverture du filtre spatial 18 lorsque la source de lumière 11 est une diode électroluminescente : 150 $\mu$m ;

Dans cette première série d'essais, du sang humain a été dilué dans un réactif sphérisant, permettant une modification de la tension de surface des globules rouges de façon à les rendre sphériques. Une calibration est préalablement réalisée, à l'aide d'un automate de référence, de façon à effectuer, de façon connue par l'homme du métier, un recalage entre la concentration du sang et le nombre de globules rouges comptés. Ce recalage tient compte du facteur de dilution, de l'épaisseur de la chambre et de la surface de l'échantillon exposée au capteur d'image.

Le protocole de préparation de l'échantillon a été le suivant :

- dilution au 1/600$^{ième}$ dans un réactif sphérisant ;
- prélèvement de 10 $\mu$l de sang dilué et injection dans la chambre fluidique disposée en regard du capteur d'image ;

Chaque échantillon a fait l'objet d'un comptage par un automate ABX Pentra DX 120, utilisé en tant que méthode de référence.

80 échantillons ont été mesurés. Les figures 5A, 5B, 5C et 5D montrent respectivement les résultats obtenus en mettant en œuvre l'invention (axes des ordonnées) en fonction des mesures de référence (axes des abscisses), la source de lumière étant :

- la diode électroluminescente émettant dans la bande spectrale 450nm - 465 nm ;
- la diode électroluminescente émettant dans la bande spectrale 520nm - 535 nm ;
- la diode électroluminescente émettant dans la bande spectrale 630nm - 640 nm ;
- la diode laser.

On a établi une régression linéaire pour chacune de ces figures, l'expression de chaque régression étant respectivement :

- $y = 1.017x - 0.04$ ($r^2 = 0.98$) ;
- $y = 1.019x - 0{,}07$ ($r^2 = 0.98$) ;
- $y = 1.017x - 0{,}07$ ($r^2 = 0.98$);
- $y = 1.027x - 0{,}11$ ($r^2 = 0.98$).

Le coefficient $r^2$ est le coefficient de détermination associé à chaque régression linéaire de type Passing-Bablok.

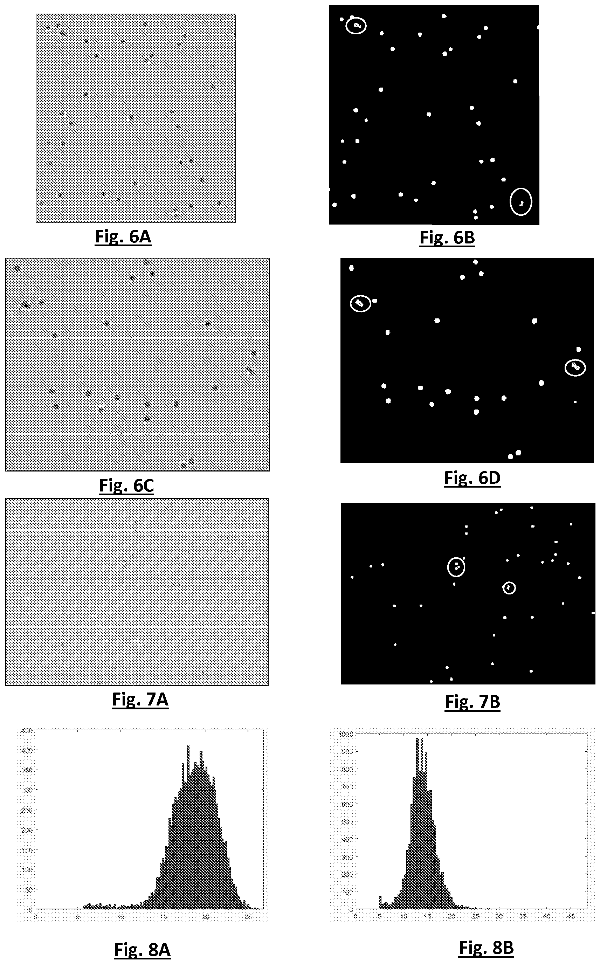

Au cours d'une deuxième série d'essais, on a dénombré les globules blancs dans des échantillons de sang humain, après lyse des globules rouges par ajout d'un réactif de lyse. La segmentation d'image a été réalisée sur la base d'un seuillage basé sur un critère d'entropie maximale. Afin de tenir compte de la densité des globules blancs, le facteur de dilution utilisé a été égal à 10. La figure 6A représente une image du module de l'image complexe dans le plan de reconstruction $P_z$, ce dernier étant un plan selon lequel s'étend l'échantillon. La figure 6B représente l'image de la figure 6A après segmentation, binarisation et détection d'amas comprenant deux globules blancs. Ces derniers sont contournés par un anneau blanc. L'identification des singulets et des doublets permet une quantification plus précise des globules blancs, par rapport à un simple dénombrement des régions d'intérêt. Les figures 6C et 6D correspondent respectivement aux figures 6A et 6B sur un autre échantillon. L'acquisition a été réalisée en utilisant une source de lumière de type laser, telle que précédemment décrite.

La méthode a également été testée, au cours d'une troisième série d'essais, sur des billes de verre de diamètre 5 $\mu$m. Il s'agit de billes de référence Bangs laboratories - SS06N, diluées au 1/2000$^{ième}$ dans un tampon salin de type PBS. L'acquisition a été réalisée en utilisant une source de lumière de type laser, telle que précédemment décrite. On observe la détection d'un amas comportant deux billes. La figure 7A représente une image du module de l'image complexe dans le plan de reconstruction $P_z$, ce dernier étant un plan selon lequel s'étend l'échantillon. La figure 7B représente l'image de la figure 7A après segmentation, binarisation et détection d'amas comprenant deux billes, ces amas étant entourés par un contour blanc.

Dans le cas de globules rouges, les inventeurs estiment qu'il est préférable que la densité surfacique de particules d'intérêt à dénombrer soit inférieure à 2000 particules par mm$^2$ de surface de détection. Au-delà, les particules sont trop proches les unes des autres, ce qui dégrade le rapport signal à bruit de chaque région d'intérêt. Aussi, il est avantageux d'estimer, selon les différents cas de figure, une densité surfacique maximale, et d'adapter en conséquence la dilution à appliquer à l'échantillon.

Une des applications visées est la numération de cellules sanguines, ces dernières pouvant être des globules blancs, des globules rouges ou des plaquettes. Les inventeurs ont constaté que lorsqu'il s'agit de globules blancs ou de globules rouges, lors de l'étape 120, il est préférable que l'image reconstruite $I_z$ représente le module de l'amplitude complexe $A_z$ dans le plan de reconstruction $P_z$, La définition des bords des régions d'intérêt, correspondant aux cellules, est plus nette. Lorsque les particules d'intérêt sont des plaquettes, il semble en revanche préférable que l'image reconstruite $I_z$ représente la phase de l'amplitude complexe $A_z$ dans le plan de reconstruction $P_z$, Les figures 8A et 8B représentent un histogramme du rapport signal sur bruit de régions d'intérêt correspondant à des globules rouges, en se basant respectivement sur le module ou la phase de l'image complexe reconstruite. Le nombre de globules rouges considérés était respectivement égal à 12166 et 12888. On observe un rapport signal sur bruit plus élevé lorsqu'on se base sur une image du module (moyenne de 18.6) que lorsqu'on se base sur une image de phase (moyenne de 13.9). Dans ces essais, les globules rouges ont été illuminés dans une bande spectrale bleue.

Les inventeurs ont réalisé des essais expérimentaux. Suite à ces essais, ils ont défini les variantes exposées ci-dessous, chaque variante pouvant être combinée à tout ou partie des étapes précédemment décrites.

Selon une première variante, on met en œuvre les étapes 100, 110 et 120 telles que précédemment décrites. Au cours de l'étape 120, la distance de reconstruction prise en compte correspond à une distance de focalisation, déterminée en mettant en œuvre un algorithme de focalisation numérique, comme précédemment décrit. L'étape 120 comporte également une détermination d'un critère de validité de la focalisation numérique. Pour cela, l'image acquise lors de l'étape 110 est partitionnée virtuellement en $p$ zones, $p$ étant un entier strictement positif. $p$ est typiquement compris entre 1 et 100, par exemple 9. Un algorithme de focalisation numérique est appliqué dans chaque zone, de façon à obtenir, pour chaque zone, une distance de focalisation $d_p$. On détermine ensuite un indicateur de dispersion $\delta(d_p)$ des distances de focalisation.

- lorsque l'indicateur de dispersion $\delta(d_p)$ dépasse un indicateur de dispersion maximal $\delta_{max}$ prédéterminé, la focalisation numérique est invalidée. Dans ce cas, la distance de focalisation est considérée comme égale à une distance de focalisation moyenne $d_{mean}$ établie en se basant sur un nombre $k$ d'échantillons préalablement analysés, pour lesquels la distance de focalisation $d_k$ a été mémorisée. Par exemple, la distance de focalisation moyenne $d_{mean}$ peut être calculée par une moyenne glissante en considérant $k$ derniers échantillons analysés, $k$ étant un entier, par exemple compris, entre 2 et 100. $d_{mean}$ peut également être une médiane des distances de focalisation $d_k$ respectives des $k$ derniers échantillons analysés.
- Lorsque l'indicateur de dispersion $\delta(d_p)$ est inférieur à l'indicateur de dispersion maximal $\delta_{max}$, la distance de focalisation est considérée comme étant la moyenne $\overline{d_p}$ (ou la médiane) des distances de focalisation $\overline{d_p}$ obtenues respectivement pour chaque zone.

L'indicateur de dispersion $\delta(d_p)$ peut être un écart entre une distance de focalisation minimale $d_{p-min}$ et une distance de focalisation maximale $d_{p-max}$. : $\delta(d_p) = d_{p-max} - d_{p-min}$. Il peut également comprendre un écart type ou une variance des distances de focalisation $d_p$.

Par ailleurs, dans chaque zone partitionnant l'image acquise, l'algorithme de focalisation numérique est établi en considérant une borne de focalisation inférieure $d_{inf}$, et une borne de focalisation supérieure $d_{sup}$. Suite à l'application de l'algorithme de focalisation numérique sur chaque zone, lorsqu'au moins pour une zone, la distance de focalisation déterminée est soit inférieure ou égale à la borne $d_{inf}$, soit supérieure ou égale à la borne $d_{sup}$, la distance de focalisation est considérée comme égale à la distance de focalisation moyenne (ou médiane) $d_{mean}$ décrite ci-dessus. En effet, lorsque l'algorithme de focalisation fournit au moins une distance de focalisation $\overline{d_p}$ inférieure ou égale à $d_{inf}$ ou supérieure ou égale à $d_{sup}$, il est probable qu'il s'agisse d'une distance de focalisation erronée. La distance de focalisation est donc remplacée par la distance $d_{mean}$, cette dernière étant considérée comme plus probable.

Selon une deuxième variante, lorsqu'au cours de l'étape 130, la segmentation est réalisée selon un seuillage d'Otsu. La valeur du seuil de segmentation ainsi obtenue est comparée au mode de l'histogramme de l'image reconstruite $I_z$, qu'il s'agisse d'une image de phase ou d'une image du module, ou leur combinaison, de l'image reconstruite. Le mode de l'histogramme correspond à un niveau d'intensité de pixels correspondant au maximum de l'histogramme de l'image reconstruite. Si le seuil de segmentation déterminé par le seuillage d'Otsu est supérieur à 90% du mode de l'histogramme, le seuil de segmentation appliqué est arbitrairement fixé à un certain pourcentage du mode de l'histogramme, par exemple compris entre 80% et 85% du mode de l'histogramme. En effet, lorsque le seuil d'Otsu est proche du mode de l'histogramme, la segmentation de l'image reconstruite n'est généralement pas satisfaisante, des zones de bruit étant considérées comme formant une ou plusieurs régions d'intérêt. Dans ces conditions, le fait d'imposer un seuil de segmentation entre 80% et 85% du mode de l'histogramme permet d'éviter cet écueil.

Selon une troisième variante, on détermine un critère de qualité $Q$ de l'image $I_z^*$ segmentée lors de l'étape 130. Lorsque le critère de qualité témoigne d'une mauvaise qualité de l'image segmentée, le procédé est interrompu.

Le critère de qualité *Q* peut correspondre à une aire globale des régions d'intérêt résultant de la segmentation effectuée au cours de l'étape 130. Ainsi, on met en œuvre les étapes 100, 110, 120 et 130 précédemment décrites. Au cours de l'étape 130, on détermine l'aire totale *A* des régions d'intérêt déterminées par la segmentation, cette dernière étant par exemple par effectuée par l'application du seuillage d'Otsu. Puis,

- lorsque l'aire totale *A* dépasse une aire maximale $A_{max}$ prédéfinie, l'image acquise lors de l'étape 110 est invalidée ;
- lorsque l'aire totale *A* est inférieure à l'aire maximale $A_{max}$, mais se situe dans le voisinage de cette dernière, on calcule un critère auxiliaire *Q'*, basé sur un rapport signal sur bruit $SNR(I_z^*)$ de l'image segmentée $I_z^*$. Par voisinage de l'aire maximale $A_{max}$, on entend compris entre l'aire maximale et un pourcentage de l'aire maximale $A_{max}$, par exemple 80% ou 90% de l'aire maximale.

L'aire maximale $A_{max}$ peut être déterminée par l'homme du métier sur base d'essais expérimentaux. Le rapport signal sur bruit $SNR(I_z^*)$ de l'image segmentée $I_z^*$ correspond à un niveau d'intensité $I_{ROI}$ dans les différentes régions d'intérêt *ROI* segmentées lors de l'étape 130, normalisé par une estimation du bruit $N_{out}$ à l'extérieur des régions d'intérêt. Le niveau d'intensité $I_{ROI}$ peut être estimé par une valeur moyenne μ ou une valeur médiane *med* de l'intensité dans les différentes régions d'intérêt *ROI*. Le bruit $N_{out}$ à l'extérieur des régions d'intérêt peut être estimé par l'écart type $\sigma$ dans l'image segmentée $I_z^*$, à l'extérieur des régions d'intérêt *ROI*. Ainsi :

$$SNR(I_z^*) = \frac{I_{ROI}}{N_{out}}$$

Le rapport signal sur bruit ainsi défini est ensuite comparé à un seuil de rapport signal sur bruit $SNR_{min}$ prédéterminé. Lorsque le rapport signal sur bruit $SNR(I_z^*)$ est supérieur à ce seuil, l'image segmentée est considérée comme valide. Dans le cas inverse, l'image segmentée est invalidée.

Selon un tel mode de réalisation, suite à l'étape 130, on détermine au moins un critère de qualité *Q* relativement à l'image segmentée $I_z^*$. Le critère de qualité peut correspondre à une comparaison entre une aire A de l'ensemble des régions d'intérêt segmentées au cours de l'étape 130, avec une aire maximale $A_{max}$ prédéfinie. En fonction de la comparaison, l'image segmentée est validée ou invalidée. Lorsque l'aire *A* de l'ensemble des régions d'intérêt segmentées s'étend en deçà de l'aire maximale $A_{max}$, dans un voisinage de cette dernière, un critère de qualité auxiliaire *Q'* est déterminé. Il peut s'agir d'une comparaison entre le rapport signal sur bruit $SNR(I_z^*)$ de l'image segmentée, tel que précédemment défini, avec un rapport signal sur bruit minimal $SNR_{min}$. En fonction de cette comparaison, l'image segmentée est validée ou invalidée.

Cette variante a été appliquée sur 305 échantillons, les particules étant des globules rouges. Elle a permis d'invalider des images correspondant à des cas particuliers tels des images vides, des images sur lesquelles le nombre de particules est trop faible ou trop important, ou des images résultant d'un problème survenu lors de l'acquisition.

Une quatrième variante, décrite ci-dessous, peut concerner plus particulièrement les échantillons comportant du sang. Au cours d'essais expérimentaux, les inventeurs ont considéré qu'en règle générale, lorsque les particules d'intérêt sont des globules rouges, il convient de prévoir, dans l'étape 140, une distinction entre *N* types de régions d'intérêts $ROI_n$ avec $1 \le n \le N$. *N* est un entier généralement compris entre 3 et 5. On rappelle que comme décrit en lien avec l'étape 140, la notation $ROI_n$ correspond à une région d'intérêt *ROI* comportant *n* particules. L'entier *N* correspond au nombre maximal de globules rouges acceptables dans une même région d'intérêt. Lorsque *N* = 5, on distingue 5 types de régions d'intérêt, correspondant à des singulets (*n*=1), des doublets (*n*=2), des triplets (*n*=3), des quadruplets (*n*=4) et des quintuplets (*n*=5). On considère que les régions d'intérêt dont la taille excède un seuil supérieur $S_{max}$, elle ne correspond pas à un amas de globules rouges. Ainsi, l'étape 140 comprend une prise en compte d'une taille maximale $S_{max}$, et un rejet d'une région d'intérêt lorsque sa taille est supérieure à la taille maximale $S_{max}$. La taille maximale $S_{max}$ est une taille supérieure à la taille correspondant à la région d'intérêt $ROI_{n=N}$. La taille maximale $S_{max}$ est paramétrable, et dépend des conditions expérimentales, par exemple de la chambre fluidique utilisée. Les régions d'intérêt dont la taille excède la taille maximale $S_{max}$ sont rejetées. On a constaté que lorsque l'échantillon analysé comporte du sang dépourvu d'agglutinines, le nombre de régions d'intérêt ainsi rejetées est inférieur à 10. Le nombre de régions d'intérêt rejetées peut être déterminé en comparant :

- le nombre de régions d'intérêt à l'issue de l'étape de segmentation 130 ;
- le nombre de régions d'intérêt à l'issue de l'étape de sélection 140.

Lorsque le nombre de régions d'intérêt rejetées est inférieur ou égal à un niveau d'acceptation $L_{max}$, prédéfini, étant par exemple inférieur ou égal à 10, la numération des particules d'intérêt est validée. Le niveau d'acceptation $L_{max}$ peut être ajusté, par l'homme du métier, au cours d'une phase expérimentale d'apprentissage. Lorsque le nombre de régions d'intérêt rejetées excède le niveau d'acceptation $L_{max}$, la numération des particules d'intérêt est invalidée et cette invalidation est signalée. Une telle situation peut par exemple correspondre à du sang comprenant des agglutinines froides. De ce fait, le sang comporte de nombreux amas de globules rouges, comportant un nombre de globules rouges supérieur au nombre maximal de globules rouges acceptable $N$. Dans un tel cas de figure, les inventeurs ont observé que le nombre de régions d'intérêt rejetées pouvait atteindre plusieurs dizaines, voire plusieurs centaines. Compte tenu du nombre de régions d'intérêt rejetées, la numération des globules rouges est fortement sous-estimée.

Au cours d'essais expérimentaux sur six échantillons comportant du sang comprenant des agglutinines froides, en considérant $N = 5$, les inventeurs ont mesuré un nombre de régions d'intérêt rejetées respectivement égal à 325, 379, 490, 508, 327 et 423. Compte tenu du nombre de régions d'intérêt rejetées, excédant le niveau d'acceptation $L_{max}$, La numération des globules rouges a donc été invalidée.

Selon un tel mode de réalisation, suite à l'étape 130, on détermine le nombre de régions d'intérêt résultant de la segmentation de l'image. L'étape 140, comporte alors :

- une prise en compte d'une taille maximale $S_{max}$ de régions d'intérêt, les régions d'intérêt dont la taille excède la taille maximale étant rejetées ;
- une détermination du nombre de régions d'intérêt rejetées ;
- une prise en compte d'un niveau d'acceptation $L_{max}$ et une comparaison du nombre de régions d'intérêt rejetées au niveau d'acceptation, en fonction de laquelle la numération des particules d'intérêt est validée ou invalidée.

Le niveau d'acceptation $L_{max}$ peut être défini, par l'homme du métier au cours d'essais expérimentaux.

L'invention peut s'appliquer au dénombrement de particules d'intérêt dans le sang, mais également dans d'autres liquides corporels de type urine, salive, sperme...Elle peut également s'appliquer dans la quantification de microorganismes, par exemple des bactéries ou des colonies bactériennes. Au-delà des applications liées à la biologie ou à la santé, l'invention peut être mise en œuvre dans le contrôle d'échantillons dans des domaines industriels ou le contrôle de l'environnement, par exemple l'agroalimentaire ou le contrôle de fluides industriels.

**Revendications**

1. Procédé de numération de particules (10a), dites particules d'intérêt, disposées dans un échantillon (10), le procédé comportant les étapes suivantes :

   a) illumination de l'échantillon (10) à l'aide d'une source de lumière (11), la source de lumière émettant une onde lumineuse incidente (12) se propageant vers l'échantillon (10) ;
   b) acquisition, à l'aide d'un capteur d'image (16), d'une image ($I_0$) de l'échantillon (10), formée dans un plan de détection ($P_0$), l'échantillon étant disposé entre la source de lumière (11) et le capteur d'image (16), chaque image étant représentative d'une onde lumineuse (14), dite onde lumineuse d'exposition, à laquelle est exposé le capteur d'image (16) sous l'effet de ladite illumination ;
   le procédé étant **caractérisé en ce qu'**il comprend également les étapes suivantes :
   c) à partir de l'image acquise ($I_0$) lors de l'étape b), application d'un opérateur de propagation ($h$) de façon à calculer une expression complexe ($A_z$) de l'onde lumineuse d'exposition (14), selon une surface de reconstruction ($P_z$) s'étendant face au plan de détection ($P_0$) ;
   d) formation d'une image ($I_z, M_z, \varphi_z$), dite image reconstruite, représentative d'une distribution du module ou de la phase de l'expression complexe selon la surface de reconstruction ;

   e) segmentation de l'image formée lors de l'étape d) pour obtenir une image de segmentation $(I_z^*)$, comportant des régions d'intérêt (ROI) espacées les unes des autres, tout ou partie des régions d'intérêt étant associées à au moins une particule d'intérêt ;
   f) détermination d'une taille de régions d'intérêt, et classification desdites régions d'intérêt en fonction de leur taille selon au moins une des classes suivantes :

- une classe selon laquelle la région d'intérêt comporte une unique particule d'intérêt ;
- une classe selon laquelle la région d'intérêt comporte un nombre entier, supérieur à 1, de particules d'intérêt ;

g) numération des particules d'intérêt à partir des régions d'intérêt ayant fait l'objet d'une classification lors de l'étape f).

**2.** Procédé selon la revendication 1, dans lequel l'étape f) comporte, préalablement à la classification :

- une détermination d'au moins un critère morphologique pour chaque région d'intérêt;
- une sélection des régions d'intérêt *(ROI)* en fonction du critère morphologique, la classification étant réalisée sur les régions d'intérêt sélectionnées.

**3.** Procédé selon la revendication 2, dans lequel au moins un critère morphologique est choisi parmi un diamètre, une taille ou un facteur de forme de chaque région d'intérêt.

**4.** Procédé selon l'une quelconque des revendications précédentes, dans lequel l'étape f) comporte une prise en compte d'une taille de référence ($S_{ref}$), représentative d'un nombre prédéterminé de particules d'intérêt, la classification est réalisée en fonction de ladite taille de référence.

**5.** Procédé selon l'une quelconque des revendications précédentes, dans lequel l'étape f) comporte les sous-étapes suivantes :

fi) une première classification des régions d'intérêt, réalisée en fonction d'une première taille de référence ($S_{ref\text{-}1}$), la première taille de référence correspondant à un nombre prédéterminé de particules d'intérêt ;
fii) suite la première classification, une détermination d'une deuxième taille de référence ($S_{ref\text{-}2}$), à partir des régions d'intérêt classifiées, lors de la sous-étape fi), comme comportant un nombre prédéfini de particules d'intérêt ;
fiii) une deuxième classification des régions d'intérêt, réalisée en fonction de la deuxième taille de référence ($S_{ref\text{-}2}$) déterminée lors de la sous-étape fii).

**6.** Procédé selon l'une quelconque des revendications précédentes dans lequel l'étape f) comporte, préalablement à la classification :

- un calcul d'un rapport signal à bruit (S/B) de plusieurs régions d'intérêt (*ROI*);
- une sélection des régions d'intérêt *(ROI)* en fonction du rapport signal à bruit (S/B) calculé pour chacune d'entre elles ;

la classification étant réalisée sur les régions d'intérêt ainsi sélectionnées.

**7.** Procédé selon l'une quelconque des revendications précédentes, dans lequel l'échantillon est mélangé à un réactif de sphérisation préalablement à l'étape b), pour modifier la forme des particules d'intérêt (10a) de façon à la rendre sphérique.

**8.** Procédé selon l'une quelconque des revendications précédentes, dans lequel l'étape c) comporte les sous-étapes suivantes :

ci) définition d'une image initiale de l'échantillon $\left(A_0^{k=0}\right)$ dans le plan de détection, à partir de l'image ($I_0$) acquise par le capteur d'image ;

cii) détermination d'une image complexe de l'échantillon $\left(A_z^{k}\right)$ dans une surface de reconstruction ($P_z$) en appliquant un opérateur de propagation à l'image initiale de l'échantillon $\left(A_0^{k=1}\right)$ définie lors de la sous-étape ci) ou à l'image de l'échantillon $\left(A_0^{k-1}\right)$, dans le plan de détection, résultant de l'itération précédente ($k$ - 1);

ciii) calcul d'un indicateur de bruit ($\varepsilon^{k}$) à partir de l'image complexe $\left(A_z^{k}\right)$ déterminée lors de la sous-étape cii), cet indicateur de bruit dépendant d'un bruit de reconstruction affectant ladite image complexe $(A_z^k)$ ;

civ) mise à jour de l'image de l'échantillon $(A_0^k)$ dans le plan de détection($P_0$) par un ajustement de valeurs de phase $(\varphi_0^k(x,y))$ des pixels de ladite image, l'ajustement étant réalisé en fonction d'une variation de l'indicateur calculé lors de la sous-étape ciii) selon lesdites valeurs de phase ;

cv) réitération des sous-étapes cii) à civ) jusqu'à l'atteinte d'un critère de convergence, de façon à obtenir une image complexe de l'échantillon (10) dans le plan détection ($P_0$) et dans la surface de reconstruction ($P_z$).

9. Procédé selon l'une quelconque des revendications précédentes, dans lequel aucune optique de formation d'image n'est disposée entre l'échantillon (10) et le capteur d'image (16).

10. Procédé selon l'une quelconque des revendications précédentes, dans lequel les particules d'intérêt sont des cellules sanguines.

11. Procédé selon la revendication 10 dans lequel, lors de l'étape d) :

   - les particules d'intérêt (10a) sont des globules rouges ou des globules blancs, l'image reconstruite étant représentative d'une distribution du module l'expression complexe ($A_z$) selon la surface de reconstruction ($P_z$);
   - les particules d'intérêt (10a) sont des plaquettes, l'image reconstruite étant représentative d'une distribution d'une phase de l'expression complexe ($A_z$) selon la surface de reconstruction ($P_z$).

12. Procédé selon l'une quelconque des revendications précédentes, dans lequel l'étape c) comprend une application d'un algorithme de focalisation numérique, de façon à déterminer une distance de focalisation, correspondant à la distance de reconstruction à laquelle s'étend la surface de reconstruction ($P_z$).

13. Procédé selon la revendication 12, dans lequel au cours de l'étape c), l'image acquise lors de l'étape b) est partitionnée en différentes zones, distinctes les unes des autres, et dans lequel l'algorithme de focalisation numérique est appliqué dans chaque zone, de façon à obtenir, pour chacune d'entre elles, une distance de focalisation ($d_p$), l'étape c) comportant également:

   - une prise en compte d'un indicateur de dispersion maximal ($\delta_{max}$);
   - un calcul d'un indicateur de dispersion ($\delta(d_p)$) représentant une dispersion des distances de focalisation obtenues ($d_p$) ;
   - une comparaison entre l'indicateur de dispersion calculé ($\delta(d_p)$) et l'indicateur de dispersion maximal ($\delta_{max}$);
   - en fonction de la comparaison :

     ▪ un calcul d'une moyenne ou d'une médiane ($d_p$) des distances de focalisation ($d_p$) obtenues pour chaque zone, la moyenne ou la médiane formant alors la distance de focalisation prise en compte lors de l'étape c);
     ▪ ou une prise en compte de distances de focalisation mémorisées, pour établir la distance de focalisation ($d_{mean}$) prise en compte lors de l'étape c).

14. Procédé selon la revendication 13, dans lequel l'indicateur de dispersion ($\delta(d_p)$) est un écart entre une distance de focalisation maximale ($d_{p-max}$) et une distance de focalisation minimale ($d_{p-min}$), ou une variance ou un écart type des distances de focalisation obtenues ($d_p$).

15. Procédé selon la revendication 12, dans lequel au cours de l'étape c), l'image acquise lors de l'étape b) est partitionnée en différentes zones, distinctes les unes des autres, et dans lequel l'algorithme de focalisation numérique est appliqué dans chaque zone, de façon à obtenir, pour chacune d'entre elles, une distance de focalisation ($d_p$), l'étape c) comportant également:

   - une prise en compte d'une borne inférieure de focalisation ($d_{inf}$);
   - une prise en compte d'une borne supérieure de focalisation ($d_{sup}$);
   - une comparaison de chaque distance de focalisation ($d_p$) avec la borne inférieure de focalisation ($d_{inf}$) et avec la borne supérieure de focalisation ($d_{sup}$);
   - en fonction de la comparaison :

- lorsque la distance de focalisation est comprise entre la borne inférieure de focalisation ($d_{inf}$) et la borne supérieure de focalisation ($d_{sup}$), calcul d'une moyenne ou d'une médiane ($\overline{d_p}$) des distances de focalisation ($d_p$) obtenues pour chaque zone, la moyenne ou la médiane formant alors la distance de focalisation prise en compte lors de l'étape c);
- lorsque la distance de focalisation ($d_p$) est inférieure ou égale à la borne inférieure de focalisation ($d_{inf}$) ou supérieure ou égale à la borne supérieure de focalisation ($d_{sup}$), prise en compte de distances de focalisation mémorisées, pour établir la distance de focalisation ($d_{mean}$) prise en compte lors de l'étape c).

**16.** Procédé selon l'une quelconque des revendications précédentes, dans lequel l'étape e) comporte :

- une détermination d'un mode de l'histogramme de l'image reconstruite ($I_z, M_z, \varphi_z$), correspondant à une intensité d'un nombre maximal de pixels de l'image reconstruite ;
- une mise en œuvre d'un seuillage d'Otsu, de façon à obtenir un seuil de segmentation sur la base duquel la segmentation de l'image reconstruite est réalisée ;
- une comparaison entre le mode de l'histogramme et le seuil de segmentation, de telle sorte que lorsque le seuil de segmentation est supérieur à 90% du mode de l'histogramme, le seuil de segmentation est fixé à un pourcentage compris entre 80% et 85% du mode de l'histogramme.

**17.** Procédé selon l'une quelconque des revendications précédentes, dans lequel l'étape e) comporte une détermination d'un critère de qualité ($Q$) de l'image segmentée $(I_z^*)$, comprenant:

- une prise en compte d'une aire maximale ($A_{max}$) prédéterminée ;
- une détermination de l'aire ($A$) de l'ensemble des régions d'intérêt ($ROI$) de l'image segmentée $(I_z^*)$ ;
- une comparaison de l'aire ($A$) de l'ensemble des régions d'intérêt avec l'aire maximale ($A_{max}$) ;
- en fonction de la comparaison, rejet ou validation de l'image segmentée $(I_z^*)$.

**18.** Procédé selon la revendication 17 dans lequel, lorsque l'image segmentée $(I_z^*)$ est validée, et que l'aire ($A$) des régions d'intérêt est située dans un voisinage de l'aire maximale ($A_{max}$), le procédé comporte une détermination d'un critère de qualité auxiliaire ($Q'$), comprenant :

- une prise en compte d'un rapport signal sur bruit minimal ($SNR_{min}$) prédéterminé ;
- un calcul d'un rapport signal sur bruit $(SNR(I_z^*))$ de l'image segmentée $(I_z^*)$, sous la forme d'un ratio entre une intensité ($I_{ROI}$) moyenne ou médiane dans les régions d'intérêt ($ROI$) et un niveau de bruit ($N_{out}$) de l'image segmentée en dehors des régions d'intérêt ;
- une comparaison entre le rapport signal sur bruit de l'image segmentée $(SNR(I_z^*))$ avec le rapport signal sur bruit minimal ($SNR_{min}$);
- en fonction de la comparaison, rejet ou validation de l'image segmentée $(I_z^*)$.

**19.** Procédé selon l'une quelconque des revendications précédentes, dans lequel lors de l'étape f), les régions d'intérêt dont la taille dépasse une taille maximale ($S_{max}$), prédéterminée, sont rejetées, le procédé comportant :

- une détermination du nombre de régions d'intérêt rejetées lors de l'étape f) ;
- une prise en compte d'un niveau d'acceptation ($L_{max}$) prédéterminé;
- une comparaison entre le nombre de régions d'intérêt rejetées lors de l'étape f) avec le niveau d'acceptation ($L_{max}$), en fonction de laquelle la numération des particules d'intérêt, effectuée lors de l'étape g), est validée ou invalidée.

**20.** Dispositif pour la numération de particules d'intérêt (10a) disposées dans un échantillon (10), le dispositif comportant :

- une source de lumière (11) apte à émettre une onde lumineuse incidente (12) se propageant vers l'échantillon (10) ;
- un support (10s), configuré pour maintenir l'échantillon (10) entre la source de lumière (11) et un capteur d'image (16) ;

un processeur (20), configuré pour recevoir une image de l'échantillon acquise par le capteur d'image (16) et à mettre en œuvre les étapes c) à g) du procédé objet de l'une quelconque des revendications 1 à 19.

**Patentansprüche**

1. Verfahren zum Zählen von Partikeln (10a), Partikel von Interesse genannt, die in einer Probe (10) angeordnet sind, wobei das Verfahren die folgenden Schritte umfasst:

   a) Beleuchten der Probe (10) mithilfe einer Lichtquelle (11), wobei die Lichtquelle eine einfallende Lichtwelle (12) aussendet, die sich zur Probe (10) hin ausbreitet;
   b) Erfassen, mithilfe eines Bildsensors (16), eines Bildes ($I_0$) der Probe (10), das in einer Detektionsebene ($P_0$) gebildet wird, wobei die Probe zwischen der Lichtquelle (11) und dem Bildsensor (16) angeordnet ist, wobei jedes Bild für eine Lichtwelle (14), Belichtungslichtwelle genannt, repräsentativ ist, mit welcher der Bildsensor (16) unter der Wirkung der Beleuchtung belichtet wird;
   wobei das Verfahren **dadurch gekennzeichnet ist, dass** es ferner die folgenden Schritte umfasst:
   c) ausgehend von dem im Schritt b) erfassten Bild ($I_0$), Anwenden eines Ausbreitungsoperators ($h$), so dass ein komplexer Ausdruck ($A_z$) der Belichtungslichtwelle (14) berechnet wird, gemäß einer Rekonstruktionsfläche ($P_z$), die sich gegenüber der Detektionsebene ($P_0$) erstreckt;
   d) Bilden eines Bildes ($I_z$, $M_z$, $\varphi_z$), rekonstruiertes Bild genannt, das für eine Verteilung des Moduls oder der Phase des komplexen Ausdrucks gemäß der Rekonstruktionsfläche repräsentativ ist;

   e) Segmentieren des im Schritt d) gebildeten Bildes, um ein Segmentierungsbild $\left(I_z^*\right)$ zu erhalten, das voneinander beabstandete Bereiche von Interesse (*ROI*) beinhaltet, wobei alle oder ein Teil der Bereiche von Interesse mindestens einem Partikel von Interesse zugeordnet sind;
   f) Bestimmen einer Größe von Bereichen von Interesse und Klassifizieren der Bereiche von Interessen in Abhängigkeit von ihrer Größe gemäß mindestens einer der folgenden Klassen:

   - eine Klasse, gemäß welcher der Bereich von Interesse einen einzigen Partikel von Interesse beinhaltet;
   - eine Klasse, gemäß welcher der Bereich von Interesse eine ganzzahlige Anzahl größer 1 von Partikeln von Interesse beinhaltet;

   g) Zählen der Partikel von Interesse ausgehend von den Bereichen von Interesse, die im Schritt f) Gegenstand einer Klassifizierung waren.

2. Verfahren nach Anspruch 1, bei dem der Schritt f) vor der Klassifizierung beinhaltet:

   - ein Bestimmen mindestens eines morphologischen Kriteriums für jeden Bereich von Interesse;
   - ein Auswählen der Bereiche von Interesse (*ROI*) in Abhängigkeit von dem morphologischen Kriterium, wobei die Klassifizierung an den ausgewählten Bereichen von Interesse ausgeführt wird.

3. Verfahren nach Anspruch 2, bei dem mindestens ein morphologisches Kriterium unter einem Durchmesser, einer Größe oder einem Formfaktor jedes Bereichs von Interesse gewählt wird.

4. Verfahren nach einem der vorhergehenden Ansprüche, bei dem der Schritt f) ein Berücksichtigen einer Referenzgröße ($S_{ref}$) beinhaltet, die für eine vorbestimmte Zahl von Partikel von Interesse repräsentativ ist, wobei die Klassifizierung in Abhängigkeit von der Referenzgröße ausgeführt wird.

5. Verfahren nach einem der vorhergehenden Ansprüche, bei dem der Schritt f) die folgenden Teilschritte beinhaltet:

   fi) eine erste Klassifizierung der Bereiche von Interesse, die in Abhängigkeit von einer ersten Referenzgröße ($S_{ref}$- 1) ausgeführt wird, wobei die erste Referenzgröße einer vorbestimmten Anzahl von Partikeln von Interesse entspricht;
   fii) nach der ersten Klassifizierung ein Bestimmen einer zweiten Referenzgröße ($S_{ref}$ - 2) ausgehend von den Bereichen von Interesse, die im Teilschritt fi) als eine vorbestimmte Anzahl von Partikeln von Interesse enthaltend klassifiziert worden;
   fiii) eine zweite Klassifizierung der Bereiche von Interesse, die in Abhängigkeit von der im Teilschritt fii) bestimmten zweiten Referenzgröße ($S_{ref}$ - 2) ausgeführt wird.

6. Verfahren nach einem der vorhergehenden Ansprüche, bei dem der Schritt f) vor der Klassifizierung beinhaltet:

- ein Berechnen eines Signal-Rausch-Verhältnisses (S/R) mehrerer Bereiche von Interesse (ROI);
- ein Auswählen der Bereiche von Interesse (ROI) in Abhängigkeit von dem für jeden von ihnen berechneten Signal-Rausch-Verhältnis (S/R), wobei die Klassifizierung an den so ausgewählten Bereichen von Interesse ausgeführt wird.

7. Verfahren nach einem der vorhergehenden Ansprüche, bei dem die Probe vor dem Schritt b) mit einem Sphärisierungsreagens gemischt wird, um die Form der Partikel von Interesse (10a) so zu ändern, dass sie kugelförmig gemacht wird.

8. Verfahren nach einem der vorhergehenden Ansprüche, bei dem der Schritt c) die folgenden Teilschritte beinhaltet:

ci) Definieren eines Ausgangsbildes der Probe $\left(A_0^{k=0}\right)$ in der Detektionsebene ausgehend von dem vom Bildsensor erfassten Bild ($I_0$);

cii) Bestimmen eines komplexen Bildes der Probe $\left(A_z^k\right)$ in einer Rekonstruktionsfläche ($P_z$) unter Anwendung eines Ausbreitungsoperators auf das Ausgangsbild der Probe $\left(A_0^{k=1}\right)$, das im Teilschritt ci) definiert wurde, oder auf das Bild der Probe $\left(A_0^{k-1}\right)$, in der Detektionsebene, das aus der vorhergehenden Iteration ($k$ - 1) resultiert;

ciii) Berechnen eines Rauschindikators ($\varepsilon^k$) ausgehend von dem im Teilschritt cii) bestimmten komplexen Bildes $\left(A_z^k\right)$, wobei dieser Rauschindikator von einem Rekonstruktionsrauschen abhängt, mit dem das komplexe Bild $\left(A_z^k\right)$ behaftet ist;

civ) Aktualisieren des Bildes der Probe $\left(A_0^k\right)$ in der Detektionsebene ($P_0$) durch eine Anpassung von Phasenwerten $\left(\varphi_0^k(x, y)\right)$ der Pixel des Bildes, wobei die Anpassung in Abhängigkeit von einer Variation des im Teilschritt ciii) berechneten Indikators gemäß den Phasenwerten ausgeführt wird;

cv) Reiteration der Teilschritte cii) bis civ) bis zum Erreichen eines Konvergenzkriteriums, so dass ein komplexes Bild der Probe (10) in der Detektionsebene ($P_0$) und in der Rekonstruktionsfläche ($P_z$) erhalten wird.

9. Verfahren nach einem der vorhergehenden Ansprüche, bei dem keine Bildformungsoptik zwischen der Probe (10) und dem Bildsensor (16) angeordnet ist.

10. Verfahren nach einem der vorhergehenden Ansprüche, bei dem die Partikel von Interesse Blutzellen sind.

11. Verfahren nach Anspruch 10, bei dem im Schritts d):

- die Partikel von Interesse (10a) rote Blutkörperchen oder weiße Blutkörperchen sind, wobei das rekonstruierte Bild für eine Verteilung des Moduls des komplexen Ausdrucks ($A_z$) gemäß der Rekonstruktionsfläche ($P_z$) repräsentativ ist;
- die Partikel von Interesse (10a) Blutplättchen sind, wobei das rekonstruierte Bild für eine Verteilung einer Phase des komplexen Ausdrucks ($A_z$) gemäß der Rekonstruktionsfläche ($P_z$) repräsentativ ist.

12. Verfahren nach einem der vorhergehenden Ansprüche, bei dem der Schritt c) eine Anwendung eines Algorithmus zur numerischen Fokussierung umfasst, so dass eine Fokussierungsdistanz bestimmt wird, die der Rekonstruktionsdistanz entspricht, in der sich die Rekonstruktionsfläche ($P_z$) erstreckt.

13. Verfahren nach Anspruch 12, bei dem im Schritt c) das im Schritt b) erfasste Bild in verschiedene, voneinander getrennte Zonen eingeteilt wird und bei dem der Algorithmus zur numerischen Fokussierung in jeder Zone angewandt wird, so dass für jede von ihnen eine Fokussierungsdistanz ($d_p$) erhalten wird, wobei der Schritt c) auch beinhaltet:

- ein Berücksichtigen eines maximalen Streuungsmaßes ($\delta_{max}$);

- ein Berechnen eines Streuungsmaßes ($\delta(d_p)$), das eine Streuung der erhaltenen Fokussierungsdistanzen ($d_p$) repräsentiert;
- einen Vergleich zwischen dem berechneten Streuungsmaß ($\delta(d_p)$) und dem maximalen Streuungsmaß ($\delta_{max}$),
- in Abhängigkeit von dem Vergleich:

  • ein Berechnen eines Mittels oder eines Medians ($\overline{d_p}$) der für jede Zone erhaltenen Fokussierungsdistanzen ($d_p$), wobei das Mittel oder der Median dann die im Schritt c) berücksichtigte Fokussierungsdistanz bildet;
  • oder eine Berücksichtigung von gespeicherten Fokussierungsdistanzen, um die im Schritt c) berücksichtigte Fokussierungsdistanz ($d_{mean}$) zu ermitteln.

14. Verfahren nach Anspruch 13, bei dem das Streuungsmaß ($\delta(d_p)$) eine Abweichung zwischen einer maximalen Fokussierungsdistanz ($d_{p\text{-}max}$) und einer minimalen Fokussierungsdistanz ($d_{p\text{-}min}$) oder eine Varianz oder eine Standardabweichung der erhaltenen Fokussierungsdistanzen ($d_p$) ist.

15. Verfahren nach Anspruch 12, bei dem im Schritt c) das im Schritt b) erfasste Bild in verschiedene, voneinander getrennte Zonen eingeteilt wird und bei dem der Algorithmus zur numerischen Fokussierung in jeder Zone angewandt wird, so dass für jede von ihnen eine Fokussierungsdistanz ($d_p$)erhalten wird, wobei der Schritt c) auch beinhaltet:

- ein Berücksichtigen eines unteren Fokussierungsgrenzwerts ($d_{inf}$);
- ein Berücksichtigen eines oberen Fokussierungsgrenzwerts ($d_{sup}$);
- ein Vergleichen jeder Fokussierungsdistanz ($d_p$) mit dem unteren Fokussierungsgrenzwert ($d_{inf}$) und mit dem oberen Fokussierungsgrenzwert ($d_{sup}$);
- in Abhängigkeit von dem Vergleich:

  • wenn die Fokussierungsdistanz zwischen dem unteren Fokussierungsgrenzwert ($d_{inf}$) und der oberen Fokussierungsdistanz ($d_{sup}$) liegt, Berechnen eines Mittels oder eines Medians ($\overline{d_p}$) der für jede Zone erhaltenen Fokussierungsdistanzen ($d_p$), wobei das Mittel oder der Median dann die im Schritt c) berücksichtigte Fokussierungsdistanz bildet;
  • wenn die Fokussierungsdistanz ($d_p$) kleiner oder gleich dem unteren Fokussierungsgrenzwert ($d_{inf}$) oder größer oder gleich dem oberen Fokussierungsgrenzwert ($d_{sup}$) ist, Berücksichtigen von gespeicherten Fokussierungsdistanzen, um die in Schritt c) berücksichtigte Fokussierungsdistanz ($d_{mean}$) zu ermitteln.

16. Verfahren nach einem der vorhergehenden Ansprüche, bei dem der Schritt e) umfasst:

- ein Bestimmen eines Modus des Histogramms des rekonstruierten Bildes ($I_z$, $M_z$, $\varphi_z$), der einer Intensität einer maximalen Anzahl von Pixeln des rekonstruierten Bildes entspricht;
- eine Ausführung eines Schwellenwertverfahrens von Otsu, so dass ein Segmentierungsschwellenwert erhalten wird, auf dessen Grundlage die Segmentierung des rekonstruierten Bildes ausgeführt wird;
- einen Vergleich zwischen dem Modus des Histogramms und dem Segmentierungsschwellenwert, so dass, wenn der Segmentierungsschwellenwert mehr als 90 % des Modus des Histogramms beträgt, der Segmentierungsschwellenwert auf einen Prozentsatz zwischen 80 % und 85 % des Modus des Histogramms festgelegt wird.

17. Verfahren nach einem der vorhergehenden Ansprüche, bei dem der Schritt c) ein Bestimmen eines Qualitätskriteriums ($Q$) des segmentierten Bildes $\left(I_z^*\right)$ beinhaltet, umfassend:

- ein Berücksichtigen eines vorbestimmten maximalen Flächeninhalts ($A_{max}$);
- ein Bestimmen des Flächeninhalts ($A$) sämtlicher Bereiche von Interesse ($ROI$) des segmentierten Bildes $\left(I_z^*\right)$;
- ein Vergleichen des Flächeninhalts ($A$) sämtlicher Bereiche von Interesse mit dem maximalen Flächeninhalt ($A_{max}$);
- in Abhängigkeit von dem Vergleich, Verwerfen oder Validieren des segmentierten Bildes $\left(I_z^*\right)$.

18. Verfahren nach Anspruch 17, bei dem, wenn das segmentierte Bild $\left(I_z^*\right)$ validiert wird und der Flächeninhalt ($A$) der Bereiche von Interesse in einer Umgebung des maximalen Flächeninhalts ($A_{max}$) liegt, das Verfahren ein Bestimmen eines Hilfsqualitätskriteriums ($Q'$) beinhaltet, umfassend:

- ein Berücksichtigen eines vorbestimmten minimalen Signal-Rausch-Verhältnisses ($SNR_{min}$);

- ein Berechnen eines Signal-Rausch-Verhältnisses $\left(SNR(I_z^*)\right)$ des segmentierten Bildes $\left(I_z^*\right)$ in Form einer Verhältniszahl zwischen einer mittleren oder medianen Intensität ($I_{ROI}$) in den Bereichen von Interesse ($ROI$) und einem Rauschpegel ($N_{out}$) des segmentierten Bildes außerhalb der Bereiche von Interesse;

- einen Vergleich zwischen dem Signal-Rausch-Verhältnis des segmentierten Bildes $\left(SNR(I_z^*)\right)$ mit dem minimalen Signal-Rausch-Verhältnis ($SNR_{min}$);

- in Abhängigkeit von dem Vergleich, Verwerfen oder Validieren des segmentierten Bildes $\left(I_z^*\right)$.

**19.** Verfahren nach einem der vorhergehenden Ansprüche, bei dem im Schritt f) die Bereiche von Interesse, deren Größe eine maximale Größe ($S_{max}$) überschreitet, verworfen werden, wobei das Verfahren beinhaltet:

- ein Bestimmen der Anzahl von Bereichen von Interesse, die im Schritt f) verworfen wurden;
- ein Berücksichtigen eines vorbestimmten Annahmeniveaus ($L_{max}$);
- einen Vergleichen zwischen der Anzahl der Bereiche von Interesse, die im Schritt f) verworfen wurden, und dem Annahmeniveau ($L_{max}$), in Abhängigkeit von dem die im Schritt g) durchgeführte Zählung der Partikel validiert wird oder nicht.

**20.** Vorrichtung zum Zählen von Partikeln von Interesse (10a), die in einer Probe (10) angeordnet sind, wobei die Vorrichtung beinhaltet:

- eine Lichtquelle (11) der geeignet ist, eine einfallende Lichtwelle (12) auszusenden, die sich zur Probe (10) hin ausbreitet;
- einen Träger (10s), der dazu ausgestaltet ist, die Probe (10) zwischen der Lichtquelle (11) und dem Bildsensor (16) zu halten;

einen Prozessor (20), der dazu ausgestaltet ist, ein vom Bildsensor (16) erfasstes Bild der Probe zu empfangen und die Schritte c) bis g) des Verfahrens nach einem der Ansprüche 1 bis 19 auszuführen.

## Claims

**1.** A method for counting particles (10a), known as particles of interest, arranged in a sample (10), the method comprising the following steps:

a) illumination of the sample (10) with the aid of a light source (11), the light source emitting an incident light wave (12) propagating toward the sample (10);
b) acquisition, with the aid of an image sensor (16), of an image ($I_0$) of the sample (10), formed in a detection plane ($P_0$), the sample being arranged between the light source (11) and the image sensor (16), each image being representative of a light wave (14), known as the exposition wave, to which the image sensor (16) is exposed under the effect of said illumination;
the method being **characterized in that** it also comprises the following steps:
c) based on the image acquired ($I_0$) during step b), application of a propagation operator ($h$) so as to calculate a complex expression ($A_z$) of the exposition wave (14), along a reconstruction surface ($P_z$) extending opposite the detection plane ($P_0$);
d) formation of an image ($I_z, M_z, \varphi_z$), known as the reconstructed image, representative of a distribution of the modulus or of the phase of the complex expression along the reconstruction surface;

e) segmentation of the image formed during step d) to obtain a segmentation image $\left(I_z^*\right)$, containing regions of interest ($ROI$) spaced apart from each other, all or some of the regions of interest being associated with at least one particle of interest;
f) determination of a size of regions of interest, and classification of said regions of interest as a function of their size according to at least one of the following classes:

- a class such that the region of interest contains a single particle of interest;
- a class such that the region of interest contains a whole number, greater than 1, of particles of interest;

g) counting of the particles of interest based on the regions of interest which underwent a classification during step f).

2. The method as claimed in claim 1, in which step f) comprises, prior to the classification:

   - a determination of at least one morphological criterion for each region of interest;
   - a selection of the regions of interest ($ROI$) as a function of the morphological criterion, the classification being done for the selected regions of interest.

3. The method as claimed in claim 2, in which at least one morphological criterion is chosen from among a diameter, a size, or a form factor of each region of interest.

4. The method as claimed in any one of the preceding claims, in which step f) comprises taking into account a reference size ($S_{ref}$), representative of a predetermined number of particles of interest, the classification being done as a function of said reference size.

5. The method as claimed in any one of the preceding claims, in which step f) comprises the following sub-steps:

   fi) a first classification of the regions of interest, performed as a function of a first reference size ($S_{ref-1}$), the first reference size corresponding to a predetermined number of particles of interest;
   fii) after the first classification, a determination of a second reference size ($S_{ref-2}$), based on the regions of interest classified, during sub-step fi), as containing a predefined number of particles of interest;
   fiii) a second classification of the regions of interest, performed as a function of the second reference size ($S_{ref-2}$) determined during sub-step fii).

6. The method as claimed in any one of the preceding claims, in which step f) comprises, prior to the classification:

   - a calculation of a signal to noise ratio (S/B) for several regions of interest ($ROI$);
   - a selection of the regions of interest ($ROI$) as a function of the signal to noise ratio (S/B) calculated for each of them;

   the classification being done for the regions of interest so selected.

7. The method as claimed in any one of the preceding claims, in which the sample is mixed with a sphering reagent prior to step b), in order to modify the shape of the particles of interest (10a) so as to make it spherical.

8. The method as claimed in any one of the preceding claims, in which step c) comprises the following sub-steps:

   ci) definition of an initial image of the sample $\left(A_0^{k=0}\right)$ in the detection plane, based on the image ($I_0$) acquired by the image sensor;

   cii) determination of a complex image of the sample $\left(A_z^k\right)$ in a reconstruction surface ($P_z$) by applying a propagation operator to the initial image of the sample $\left(A_0^{k=1}\right)$ defined during sub-step ci) or to the image of the sample $\left(A_0^{k-1}\right)$, in the detection plane, resulting from the preceding iteration ($k$ - 1);

   ciii) calculation of a noise indicator ($\varepsilon^k$) based on the complex image $\left(A_z^k\right)$ determined during sub-step cii), this noise indicator depending on a reconstruction noise affecting said complex image $\left(A_z^k\right)$;

   civ) updating of the image of the sample $\left(A_0^k\right)$ in the detection plane ($P_0$) by an adjustment of phase values $\left(\varphi_0^k(x, y)\right)$ of the pixels of said image, the adjustment being done as a function of a variation of the indicator calculated during sub-step ciii) according to said phase values;

   cv) reiteration of sub-steps cii) to civ) until achieving a criterion of convergence, so as to obtain a complex image of the sample (10) in the detection plane ($P_0$) and in the reconstruction surface ($P_z$).

9.  The method as claimed in any one of the preceding claims, in which no image-forming optic is placed between the sample (10) and the image sensor (16).

10. The method as claimed in any one of the preceding claims, in which the particles of interest are blood cells.

11. The method as claimed in claim 10, in which during step d):

    - the particles of interest (10a) are red blood cells or white blood cells, the reconstructed image being representative of a distribution of the modulus of the complex expression ($A_z$) along the reconstruction surface ($P_z$);
    - the particles of interest (10a) are platelets, the reconstructed image being representative of a distribution of a phase of the complex expression ($A_z$) along the reconstruction surface ($P_z$).

12. The method as claimed in any one of the preceding claims, in which step c) comprises an application of a digital focusing algorithm so as to determine a focusing distance corresponding to the distance of reconstruction to which the reconstruction surface ($P_z$) extends.

13. The method as claimed in claim 12, in which during step c) the image acquired during step b) is partitioned into different zones, distinct from each other, and in which the digital focusing algorithm is applied in each zone so as to obtain, for each of them, a focusing distance ($d_p$), step c) also comprising:

    - taking into account a maximum dispersion indicator ($\delta_{max}$);
    - calculation of a dispersion indicator ($\delta(d_p)$) representing a dispersion of the obtained focusing distances ($d_p$);
    - a comparison between the calculated dispersion indicator ($\delta(d_p)$) and the maximum dispersion indicator ($\delta_{max}$);
    - as a function of the comparison:

        - calculation of a mean or a median ($\overline{d_p}$) of the focusing distances ($d_p$) obtained for each zone, the mean or the median then forming the focusing distance used during step c);
        - or taking into account memorized focusing distances in order to establish the focusing distance ($d_{mean}$) used during step c).

14. The method as claimed in claim 13, in which the dispersion indicator (($\delta(d_p)$)) is a difference between a maximum focusing distance ($d_{p-max}$) and a minimum focusing distance ($d_{p-min}$), or a variance or a standard deviation of the obtained focusing distances ($d_p$).

15. The method as claimed in claim 12, in which during step c) the image acquired during step b) is partitioned into different zones, distinct from each other, and in which the digital focusing algorithm is applied in each zone so as to obtain, for each of them, a focusing distance ($d_p$), step c) also comprising:

    - taking into account a lower focusing limit ($d_{inf}$);
    - taking into account an upper focusing limit ($d_{sup}$);
    - a comparison of each focusing distance ($d_p$) with the lower focusing limit ($d_{inf}$) and with the upper focusing limit ($d_{sup}$);
    - as a function of the comparison:

        - if the focusing distance is between the lower focusing limit ($d_{inf}$) and the upper focusing limit ($d_{sup}$), calculation of a mean or a median ($\overline{d_p}$) of the focusing distances ($d_p$) obtained for each zone, the mean or the median then forming the focusing distance used during step c);
        - if the focusing distance ($d_p$) is less than or equal to the lower focusing limit ($d_{inf}$) or greater than or equal to the upper focusing limit ($d_{sup}$), taking into account memorized focusing distances in order to establish the focusing distance ($d_{mean}$) used during step c).

16. The method as claimed in any one of the preceding claims, in which step e) comprises:

    - a determination of a mode of the histogram of the reconstructed image ($I_z$, $M_z$, $\varphi_z$), corresponding to an intensity of a maximum number of pixels of the reconstructed image;
    - implementing an Otsu thresholding in order to obtain a segmentation threshold based on which the segmentation of the reconstructed image is done;

- a comparison between the mode of the histogram and the segmentation threshold, such that when the segmentation threshold is greater than 90% of the mode of the histogram the segmentation threshold is set at a percentage between 80% and 85% of the mode of the histogram.

**17.** The method as claimed in any one of the preceding claims, in which step e) comprises a determination of a criterion of quality ($Q$) of the segmented image $(I_z^*)$, comprising:

- taking into account a predetermined maximum area ($A_{max}$);
- a determination of the area ($A$) of all of the regions of interest ($ROI$) of the segmented image $(I_z^*)$;
- a comparison of the area ($A$) of all of the regions of interest with the maximum area ($A_{max}$);
- as a function of the comparison, rejection or validation of the segmented image $(I_z^*)$.

**18.** The method as claimed in claim 17, in which, if the segmented image $(I_z^*)$ is validated, and the area ($A$) of the regions of interest is situated close to the maximum area ($A_{max}$), the method comprises a determination of an auxiliary criterion of quality ($Q'$), comprising:

- taking into account a predetermined minimum signal to noise ratio ($SNR_{min}$);
- calculation of a signal to noise ratio $(SNR(I_z^*))$ of the segmented image $(I_z^*)$, in the form of a ratio between a mean or median intensity ($I_{ROI}$) in the regions of interest ($ROI$) and a noise level ($N_{out}$) of the segmented image outside the regions of interest;
- a comparison between the signal to noise ratio of the segmented image $(SNR(I_z^*))$ and the minimum signal to noise ratio ($SNR_{min}$);
- as a function of the comparison, rejection or validation of the segmented image $(I_z^*)$.

**19.** The method as claimed in any one of the preceding claims, in which during step f) the regions of interest whose size exceeds a maximum predetermined size ($S_{max}$) are rejected, the method comprising:

- a determination of the number of regions of interest rejected during step f);
- taking into account a predetermined level of acceptance ($L_{max}$);
- a comparison between the number of regions of interest rejected during step f) and the level of acceptance ($L_{max}$), as a function of which the counting of the particles of interest, performed during step g), is validated or invalidated.

**20.** A device for the counting of particles of interest (10a) arranged in a sample (10), the device comprising:

- a light source (11) able to emit an incident light wave (12) propagating toward the sample (10);
- a support (10s) designed to hold the sample (10) between the light source (11) and an image sensor (16);

a processor (20) designed to receive an image of the sample acquired by the image sensor (16) and to carry out steps c) to g) of the method as claimed in any one of claims 1 to 19.

**Fig. 1A**

**Fig. 1B**

**Fig. 2A**

**Fig. 2B**

**Fig. 2C**

**Fig. 2D**

**Fig. 2E**

**Fig. 3A**

**Fig. 3B**

S/B

**Fig. 3C**

S/B

**Fig. 3D**

$I_z^*$

| 141 |

| 142 |

$S_{ref-1}$

| 143 |

$ROI_n$

| 144 |

$S/B$

| 145 |

$S_{ref-2}$

| 146 | ——→ | 147 |

$ROI_n$

**Fig. 3E**

$$A_0^{k=1}$$

121

$$A_z^k$$

122

$$\epsilon^k (x, y)$$

123

$$\epsilon^k$$

120

124

$$\nabla \epsilon^k$$

$$A_0^k$$

125

$$\varphi_0^k (x, y)$$

$$A_0^k \quad \varphi_0^k (x, y)$$

126

**Fig 4A**

$$A_z$$

$$A_z \longleftarrow A_z^k$$

$$h$$

$$\epsilon^k$$

$$A_0^k$$

$$A_0^k(x, y) \qquad \varphi_0^k (x, y)$$

$$I_0$$

**Fig. 4B**

**Fig. 5A**

**Fig. 5B**

**Fig. 5C**

**Fig. 5D**

**Fig. 6A**

**Fig. 6B**

**Fig. 6C**

**Fig. 6D**

**Fig. 7A**

**Fig. 7B**

**Fig. 8A**

**Fig. 8B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20120218379 A
- US 20120148141 A
- WO 2016151249 A
- US 20130308135 A
- WO 2015195642 A
- US 20080160566 A
- FR 1652500

**Littérature non-brevet citée dans la description**

- **RYLE et al.** Digital in-line holography of biological specimens. *Proc. Of SPIE,* 2006, vol. 6311